# EUROPÄISCHE PATENTSCHRIFT

(11) **EP 3 280 526 B1**
(45) Veröffentlichungstag und Bekanntmachung des Hinweises auf die Patenterteilung: **25.06.2025**
(21) Anmeldenummer: 16719226.9
(22) Anmeldetag: 07.04.2016
(51) Int. Cl.: B01J 19/00

(54) **VORRICHTUNG MIT EINER VIELZAHL VON PARTIKELN UND VERFAHREN ZUM HERSTELLEN DERSELBEN**
DEVICE WITH A PLURALITY OF PARTICLES, AND METHOD FOR PRODUCING SAME
DISPOSITIF COMPORTANT UNE PLURALITÉ DE PARTICULES ET PROCÉDÉ DE FABRICATION DE CELUI-CI

(30) Priorität: 09.04.2015 DE 102015206377
(43) Veröffentlichungstag der Anmeldung: 14.02.2018
(60) Teilanmeldung: 18156829.6
(73) Patentinhaber: Fraunhofer-Gesellschaft zur Förderung der angewandten Forschung e.V., 80686 München (DE)
(72) Erfinder: LISEC, Thomas, 25524 Itzehoe (DE); CHEMNITZ, Steffen, 24116 Kiel (DE); WAGNER, Bernhard, 25582 Looft (DE)
(74) Vertreter: Schenk, Markus
(86) Internationale Anmeldenummer: PCT/EP2016/057659
(87) Internationale Veröffentlichungsnummer: WO 2016/162441

(56) Entgegenhaltungen:
- EP-A2- 2 055 374
- WO-A1-2012/104106
- WO-A2-2015/081294
- US-A1- 2006 140 843
- US-A1- 2007 134 939

## Beschreibung

Die vorliegende Erfindung bezieht sich auf eine Vorrichtung mit einer Vielzahl von Partikeln und auf ein Verfahren zum Herstellen derselben. Die vorliegende Erfindung bezieht sich ferner auf miniaturisierte Reaktoren mit großer innerer Oberfläche für chemische oder physikalische Prozesse.

Mikroreaktoren, d.h. Volumina im µl-Bereich zur Durchführung chemischer Reaktionen oder physikalischer Prozesse in miniaturisierten Systemen, sind von erheblichem Interesse für viele Anwendungen. Dazu gehören Durchflusszellen zur Synthese oder Detektion chemischer Verbindungen, zur Filterung oder Vermischung von Gasen oder Flüssigkeiten, zur selektiven Absorption von Substanzen aus Gasen oder Flüssigkeiten, aber auch z.B. Brennstoffzellen zur Energiegewinnung oder Container mit reaktiven Substanzen, die gezielt aktiviert werden können. In vielen Fällen ist dabei erforderlich, in einem miniaturisierten Hohlraum mit definierten Abmessungen und vorgegebenen Zu- bzw. Austrittsöffnungen eine möglichst große innere Oberfläche bereitzustellen.

Die Herstellung poröser Keramiken oder Metalle an sich ist industriell etabliert. Es sind viele Verfahren bekannt, vom Sintern von Pulvern bis zur Pyrolyse von Keramik-Polymer-Schäumen. Allen Verfahren ist gemeinsam, dass Temperaturen von zumeist deutlich über 400°C benötigt werden. Ferner entstehen Rohlinge des porösen Materials, die durch weitere Bearbeitungsschritte zuerst in die für eine bestimmte Anwendung erforderliche Form gebracht und dann in den benötigten Hohlraum integriert werden müssen. Beides ist nicht kompatibel zu miniaturisierten Systemen.

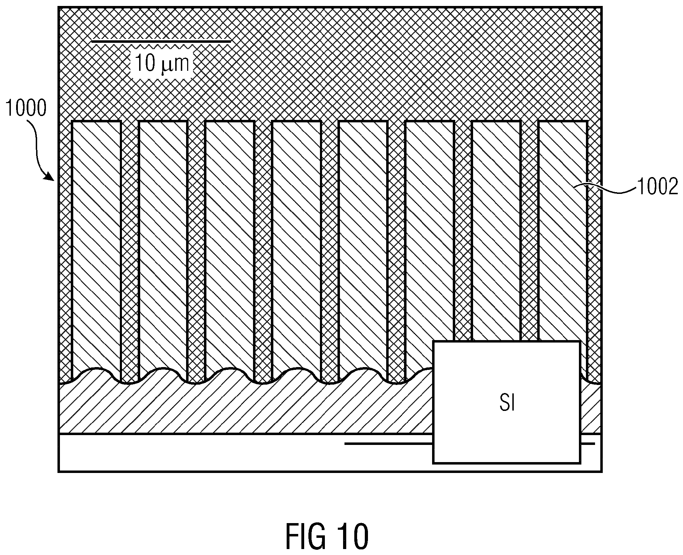

Große Oberflächen für MEMS-Anwendungen (MEMS = Microelectromechanical System, mikroelektromechanisches System) können durch Strukturieren von Silizium mittels Trockenätzen oder dessen anodische Oxidation erzeugt werden. Fig. 10 zeigt ein Array 1000 von Säulen 1002, wie es beispielsweise als chromatographische Trennsäule einsetzbar ist. Das Array 1000 ist aus Silizium und mittels eines DRIE-Verfahrens (DRIE = Deep Reactive Ion Etching, Verfahren zur Erzeugung tiefer geometrischer Strukturen in Silizium durch reaktives Ionenätzen) bis auf eine Tiefe von 30 µm gefertigt. Da der Abstand zwischen den Säulen mit einer Querschnittsfläche von 3x3 µm² nur 2 µm beträgt, wird im Vergleich zu einem glatten Kanal derselben Tiefe eine Flächenvergrößerung um den Faktor 12 erzielt, wie es beispielsweise in [1] beschrieben ist. Das Array 1000 wird beispielsweise als Trennsäule für Flüssigphasen-Chromatographie eingesetzt.

Größere Oberflächen lassen sich durch elektrochemisches Ätzen (anodische Oxidation) von Silizium in HF-basierten Lösungen (HF = Fluor (F) - Wasserstoff (H)) erzielen. In [2] wird auf diese Weise eine 30 µm dicke Silizium mit vertikalen Poren hergestellt und vom Substrat abgelöst. Anschließend wird die Membran durch Kleben in ein mikrofluidisches System aus Kunststoff integriert.

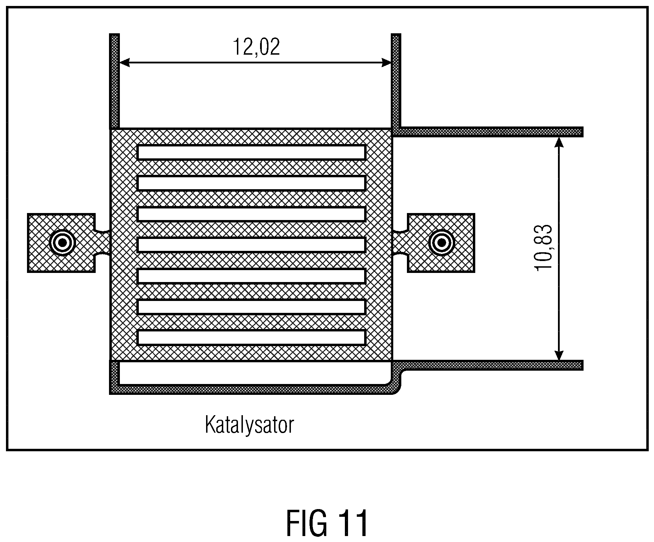

Auf ähnliche Weise können poröse Alumina-Schichten (Alumina = Aluminiumoxid) durch anodische Oxidation von Aluminium erzeugt werden. In [3] wird ein Katalysator beschrieben, der aus einer 5 µm dicken, mit Platin imprägnierten Alumina-Schicht in einem Al-Röhrchen mit 0,6 mm Durchmesser besteht. Der in [3] untersuchte Prozess der katalytischen Verbrennung von Butan wird von der Reaktionsgeschwindigkeit auf der Oberfläche begrenzt. Fig. 11 zeigt eine vergleichbare MEMS-Struktur aus Silizium und Glas, beruhend auf einem geätzten Kanal, der mit einer nur ca. 2 µm dicken porösen Alumina-Schicht ausgekleidet wurde. Die MEMS-Struktur zeigt eine etwas schlechtere Performance als das Al-Röhrchen, da es aus technologischen Gründen nicht möglich war, mehr als 2 µm Aluminium als Ausgangsmaterial für den Katalysator in dem miniaturisierten Kanal aufzubringen.

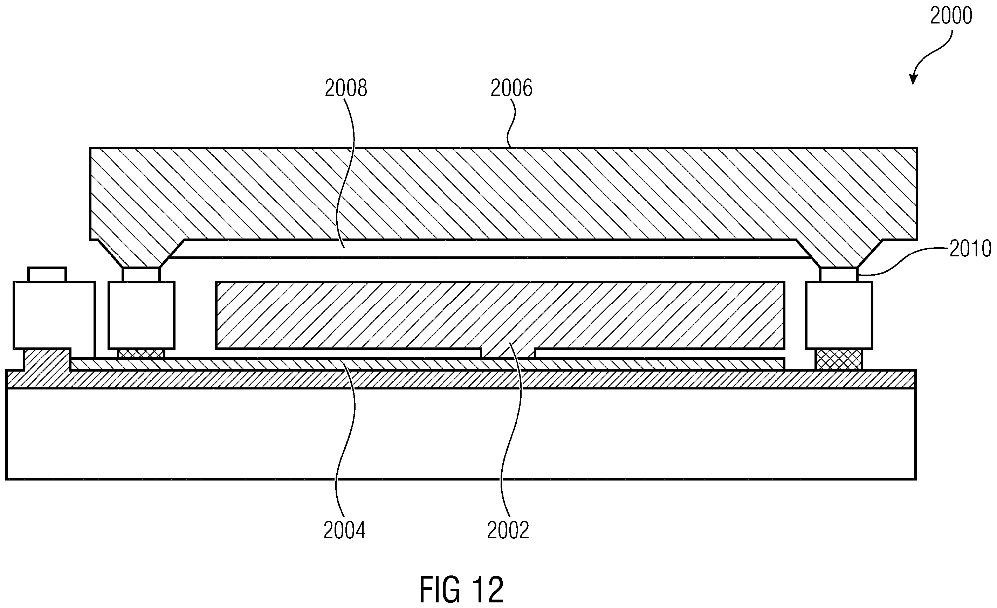

Für Inertialsensoren, Resonatoren und IR-Sensoren (IR = Infrarot) ist es oftmals erforderlich, ein Vakuum in einer abgeschlossenen MEMS-Kavität aufrechtzuerhalten. Hierzu werden Getterschichten verwendet, die durch Aufdampfen oder Sputtern in entsprechende Vertiefungen im Kappensubstrat eingebracht werden. Anschließend wird das Kappensubstrat mit dem Sensorsubstrat durch Bonden verbunden, d.h. die einzelnen MEMS-Kavitäten werden hermetisch verschlossen. Ein entsprechender Herstellungsprozess für polysiliziumbasierte Inertialsensoren wird beispielsweise in [4] beschrieben und ist in Fig. 12 dargestellt. Fig. 12 zeigt einen schematischen Querschnitt durch einen Inertialsensor 2000 mit einer Getterschicht 2008 innerhalb der MEMS-Kavität. Der Inertialsensor 2000 umfasst einen Sensorwafer mit der freistehenden, beweglichen Struktur 2002 und dem Kappenwafer 2006 mit der Getterschicht 2008. Eine Bewegung der beweglichen Struktur 2002 ist gegenüber einer Elektrode 2004 erfassbar. An einem Kappensubstrat 2006 ist eine Getterschicht 2008 aufgebracht. Ein Volumen des Sensors ist mittels einer Bondverbindung 2010 abgedichtet. Da die Getterschicht 2008 nur wenige µm dick ist, nimmt sie einen großen Teil der MEMS-Kavität auf der Kappenseite ein. Sie wird erst unmittelbar vor dem Waferbonden aufgebracht, um eine Degradation des Getters zu vermeiden. Zur Aktivierung des Getters wird der Waferstack nach dem Bonden bei Temperaturen über 200°C ausgelagert. Während der Temperierung stellt sich in der hermetisch verschlossenen MEMS-Kavität ein Vakuum ein. Das Absorptionsvermögen des kalten Getters ist eher gering.

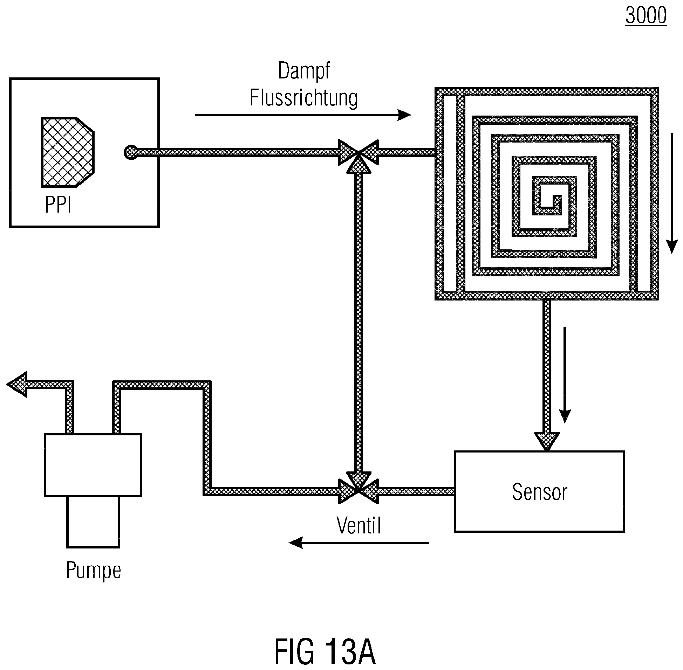

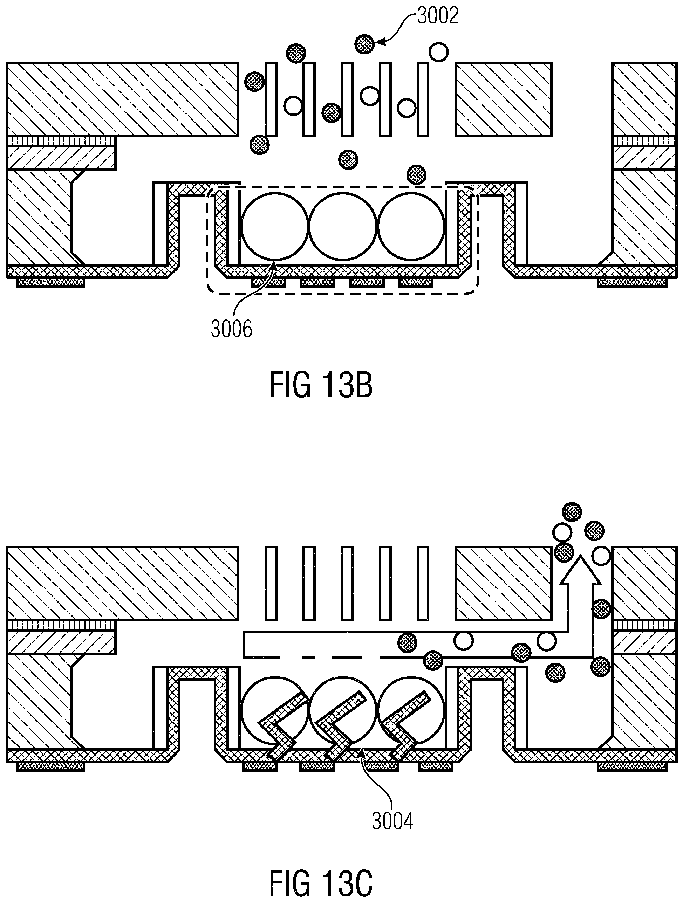

Miniaturisierte Gas-Chromatographen können von erheblichem Interesse sein, beispielsweise für die Überwachung der Raumluft in Gebäuden. Die Leistungsfähigkeit solcher Systeme wird jedoch durch die geringe Länge der Trennsäule erheblich eingeschränkt. Aus diesem Grund wird ein sogenannter Preconcentrator (Vorkonzentrierer) vor der Säule platziert, wie es beispielsweise in [5] beschrieben und in den Fig. 13a-c gezeigt ist. Fig. 13a zeigt ein schematisches Blockschaltbild eines miniaturisierten Gas-Chromatographen. Fig. 13b zeigt einen schematischen Querschnitt zur Illustration einer Absorption einer gasförmigen Substanz 3002. Fig. 13c zeigt einen schematischen Querschnitt des Funktionsprinzips der Abgabe der zuvor adsorbierten gasförmigen Substanz 3002. Der Gas-Chromatograph 3000 umfasst ein mit einem oder mehreren Adsorbenten 3006 gefülltes Volumen, das eine bestimmte Zeit von dem zu untersuchenden Gasgemisch (gasförmige Substanz 3002) durchströmt wird, um die nachzuweisenden Substanzen anzureichern. Durch Aufheizen mittels eines Heizelements 3004 werden diese dann schlagartig freigesetzt und in die Trennsäule eingeleitet. Das Einbringen pulverförmiger Adsorbenten in ein sehr kleines Volumen gestaltet sich schwierig. Zum einen muss das Volumen gleichmäßig befüllt, zum anderen ein Herausrieseln durch einen Ein- oder Auslass verhindert werden. In [5] werden daher vergleichsweise große Adsorberteilchen in die noch unverschlossene Kavität des Preconcentrators eingebracht. Statt große Adsorbententeilchen zu verwenden, wird in [6] eine Adsorbenten-Schicht mittels Ink-Jet-Printing (Tintenstrahldrucken) in die Preconcentrator-Struktur eingebracht.

In US 2007/0134939 A1 ist ein Verfahren zum Formen eines Nanokanals beschrieben, das eine Abscheidung eines fotosensitiven Filmstapels umfasst. In Absatz [0024] ist beschrieben, dass Nanopartikel durch Spin Coating abgeschieden werden können, das bedeutet, es werden alle Partikel beschichtet.

In US 2006/0140843 A1 ist eine Unterlage eines Katalysators mit einem monolithischen Nicht-Oxid-Material beschrieben. Ein Herstellungsverfahren umfasst ein Erhitzen einer Struktur.

In EP 2 055 374 A2 ist ein Mikroreaktor beschreiben, der ein Substrat mit einer Hohlraumstruktur und mindestens ein auf und/oder in der Hohlraumstruktur angeordnetes katalytisch aktives Material aufweist.

Wünschenswert wäre demnach ein Konzept für Reaktoren, die eine hohe Prozessgeschwindigkeit und/oder einen effizienten Betrieb ermöglichen.

Eine Aufgabe der vorliegenden Erfindung besteht deshalb darin, Konzepte zu schaffen, die eine hohe Prozessgeschwindigkeit von physikalischen oder chemischen Reaktionen und/oder einen effizienten Ablauf der Reaktionen in einem reproduzierbaren Dauerbetrieb ermöglichen.

Die Aufgabe wird durch den Gegenstand der unabhängigen Patentansprüche gelöst.

Eine Erkenntnis der vorliegenden Erfindung besteht darin, erkannt zu haben, dass obige Aufgabe dadurch gelöst werden kann, dass eine Vielzahl von Partikeln in einer Aussparung angeordnet wird, wobei die Vielzahl von Partikeln eine hohe Gesamtoberfläche aufweist, so dass chemische oder physikalische Reaktionen an der Oberfläche der Partikel mit einer hohen Geschwindigkeit ablaufen können. Ein Verbinden eines Teils der Partikel zu einer porösen Struktur ermöglicht ein Verhindern eines Entweichens der restlichen Partikel, so dass der Betrieb des Reaktors reproduzierbar und dauerhaft ermöglicht ist.

Eine weitere Erkenntnis der vorliegenden Erfindung besteht darin, erkannt zu haben, dass durch Anordnen eines Heizelements benachbart zu einer Vielzahl von Partikeln, die mittels einer Beschichtung zu einer porösen Struktur verbunden sind, eine effiziente und andere Bereiche der Vorrichtung gering beeinflussende Erwärmung zum Auslösen oder Beschleunigen eines chemischen oder physikalischen Prozesses möglich ist, so dass die chemischen oder physikalischen Prozesse mit einer hohen Prozessgeschwindigkeit stattfinden können.

Gemäß einem Beispiel umfasst eine Vorrichtung ein Substrat, das eine Aussparung aufweist und eine Vielzahl von Partikeln, die in der Aussparung angeordnet sind. Ein erster Anteil der Partikel ist mittels einer Beschichtung zu einer porösen Struktur verbunden. Ein zweiter Anteil der Partikel ist nicht mittels der Beschichtung verbunden. Der erste Anteil von Partikeln ist näher an einer Öffnung der Aussparung angeordnet als der zweite Anteil von Partikeln, so dass ein Entweichen des zweiten Anteils von Partikeln aus der Aussparung durch die Öffnung verhindert wird. Dies ermöglicht, dass Reaktionseigenschaften des unbeschichteten Anteils von Partikeln von der Beschichtung wenig oder nicht beeinflusst werden. Gleichzeitig kann mittels der Anordnung von Partikeln eine hohe Oberfläche und mithin eine hohe Prozessgeschwindigkeit erhalten werden. Ein Medium, das mit der Vielzahl von Partikeln oder unter deren Zuhilfenahme (Katalysator) reagieren soll, kann durch die poröse Struktur an die unbeschichteten Partikel gelangen.

Gemäß einem weiteren Beispiel umfasst der erste Anteil von Partikeln eine Vielzahl von zwischen den Partikeln des ersten Anteils angeordneten Hohlräumen, die zumindest teilweise miteinander verbunden sind, wobei die poröse Struktur unbeweglich mit dem Substrat verbunden ist. Vorteilhaft an diesem Ausführungsbeispiel ist, dass ein Medium den ersten Anteil von Partikeln mittels der Hohlräume und somit die poröse Struktur durchströmen kann, um an die unbeschichteten Partikel zu gelangen.

Gemäß einem weiteren Beispiel grenzt die Öffnung der Aussparung an eine Kavität der Vorrichtung an. Vorteilhaft daran ist, dass der zweite Anteil von Partikeln durch den ersten Anteil von Partikeln an Ort und Stelle gehalten werden kann. Bezogen auf die Kavität der Vorrichtung, beispielsweise ein inneres Volumen, kann so ein Herausfallen oder Rieseln des zweiten Anteils von Partikeln verhindert werden.

Gemäß einem weiteren Beispiel umfasst die Vielzahl von Partikeln ein Konzentratormaterial, das ausgebildet ist, um mindestens einen Stoff aus der Umgebung der Aussparung zu binden. Vorteilhaft daran ist, dass die Vielzahl von Partikeln als Preconcentrator genutzt werden können, wobei die Vielzahl von Partikeln bzw. deren große Oberfläche ein hohes Maß an dem aus der Umgebung gebundenen Stoff ermöglichen. Ein mittels des Preconcentrators gebundener Stoff kann somit schnell und/oder in einer hohen Konzentration konzentriert werden.

Gemäß einem weiteren Ausführungsbeispiel umfasst eine Vorrichtung ein Substrat und eine Vielzahl von Partikeln, die mittels einer Beschichtung zu einer porösen Struktur verbunden sind, wobei die poröse Struktur unbeweglich mit dem Substrat verbunden ist. Die Vorrichtung umfasst ferner ein Heizelement, das ausgebildet ist, um die Vielzahl von Partikeln zu erwärmen. Vorteilhaft daran ist, dass basierend auf der Erwärmung durch das Heizelement chemische oder physikalische Prozesse in Gang gesetzt oder zumindest unterstützt oder beschleunigt werden können, so dass eine Prozessgeschwindigkeit weiter erhöht ist. Die Vorrichtung umfasst ferner einen Heizkörper, der durch die Vielzahl von Partikeln von dem Substrat beabstandet ist, wobei das Heizelement an dem Heizkörper angeordnet ist, und ausgebildet ist, um den Heizkörper zu erwärmen, so dass der Heizkörper die Vielzahl von Partikel erwärmt. Der Heizkörper ist eine Inselstruktur, die von den Partikeln der porösen Struktur umschlossen ist. Vorteilhaft an diesem Ausführungsbeispiel ist, dass eine Erwärmung des Heizkörpers in einem hohen Maß an die Partikel abgegeben werden kann und lediglich eine geringe Erwärmung des umliegenden Substrats erfolgt. So kann eine Temperaturbeeinflussung von benachbarten Strukturen verringert oder vermieden werden.

Gemäß einem weiteren Ausführungsbeispiel umfasst eine Vorrichtung ferner ein Sensorelement, das benachbart zu der Vielzahl von Partikeln angeordnet ist und ausgebildet ist, um einen Parameter der Vielzahl von Partikeln, einen Parameter einer Kavität der Vorrichtung und/oder einen Parameter eines Mediums, das zwischen der Vielzahl von Partikeln angeordnet ist, zu erfassen. Vorteilhaft an diesem Ausführungsbeispiel ist, dass Prozessparameter des an oder benachbart zu den Partikeln ablaufenden Prozesses direkt oder indirekt erfassbar sind, so dass eine Ansteuerung oder eine Kontrolle der Prozesse exakt gesteuert werden kann.

Gemäß einem weiteren Ausführungsbeispiel umfasst ein Verfahren zum Herstellen einer Vorrichtung ein Bereitstellen eines Substrats, das eine Aussparung aufweist, ein Einbringen einer Vielzahl von Partikeln in die Aussparung. Das Verfahren umfasst ferner ein Beschichten eines Anteils der Vielzahl von Partikeln, so dass der erste Anteil zu einer porösen Struktur verbunden ist. Die Beschichtung erfolgt durch einen Beschichtungsprozess, der eine Eindringtiefe von einer Öffnung der Aussparung ausgehend in die Aussparung hinein aufweist. Die Eindringtiefe wird so eingestellt, dass ein zweiter Anteil der Partikel nicht mittels der Beschichtung verbunden ist und so dass der erste Anteil von Partikeln zwischen dem zweiten Anteil von Partikeln und einer Umgebung der Aussparung angeordnet ist und so dass eine Bewegung des zweiten Anteils von Partikeln hin zu der Umgebung der Aussparung im Wesentlichen verhindert ist. Das heißt, der erste Anteil von Partikeln kann der Öffnung der Aussparung zugewandt angeordnet sein.

Gemäß einem weiteren Ausführungsbeispiel umfasst ein Verfahren zur Herstellung einer Vorrichtung ein Bereitstellen eines Substrats, ein Anordnen einer Vielzahl von Partikeln an dem Substrat und ein Beschichten der Vielzahl von Partikeln und des Substrats. Das Beschichten wird so ausgeführt, dass die Vielzahl von Partikeln zumindest teilweise beschichtet sind und zu einer porösen Struktur verbunden sind, so dass die poröse Struktur unbeweglich mit dem Substrat verbunden ist. Das Verfahren umfasst ferner ein Anordnen eines Heizelements, so dass ein Erwärmen des Heizelements die Vielzahl von Partikeln erwärmt.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische Seitenschnittansicht einer Vorrichtung mit einer Vielzahl von Partikeln gemäß einem Ausführungsbeispiel;
- Fig. 2: eine schematische Seitenschnittansicht einer Vorrichtung, bei der nahezu alle Partikel beschichtet sind gemäß einem Ausführungsbeispiel;
- Fig. 3a: einen ersten schematischen Schritt eines Verfahrens zur Herstellung einer Vorrichtung, bei dem ein Substrat bereitgestellt wird gemäß einem Ausführungsbeispiel;
- Fig. 3b: einen zweiten schematischen Schritt des Verfahrens zur Herstellung der Vorrichtung, in dem zwei Aussparungen in dem Substrat angeordnet werden gemäß einem Ausführungsbeispiel;
- Fig. 3c: einen dritten schematischen Schritt des Verfahrens zur Herstellung der Vorrichtung, bei dem eine Vielzahl von Partikeln in die Kavitäten angeordnet wird gemäß einem Ausführungsbeispiel;
- Fig. 3d: einen vierten schematischen Schritt des Verfahrens zur Herstellung der Vorrichtung, bei dem die Partikel mittels einer Beschichtung beschichtet werden gemäß einem Ausführungsbeispiel;
- Fig. 3e: einen fünften schematischen Schritt des Verfahrens zur Herstellung der Vorrichtung, bei dem das Substrat teilweise entfernt wird gemäß einem Ausführungsbeispiel;
- Fig. 4a: einen ersten schematischen Schritt eines weiteren Verfahrens zur Herstellung einer Vorrichtung, bei dem eine Aussparung in das Substrat 12 geformt wird gemäß einem Ausführungsbeispiel;
- Fig. 4b: einen zweiten schematischen Schritt des Verfahrens zur Herstellung der Vorrichtung, bei dem Partikel in die Aussparung 14 angeordnet werden gemäß einem Ausführungsbeispiel;
- Fig. 4c: einen dritten schematischen Schritt des Verfahrens zur Herstellung der Vorrichtung, bei dem mittels der Beschichtung der Partikel eine poröse Struktur erhalten wird gemäß einem Ausführungsbeispiel;
- Fig. 4d: einen vierten schematischen Schritt des Verfahrens zur Herstellung der Vorrichtung, in dem an der porösen Struktur eine Materialschicht angeordnet wird gemäß einem Ausführungsbeispiel;
- Fig. 4e: einen fünften schematischen Schritt des Verfahrens zur Herstellung der Vorrichtung, bei dem ein oder mehrere elektrisch leitfähige Elemente an der Materialschicht angeordnet werden gemäß einem Ausführungsbeispiel;
- Fig. 4f: einen sechsten schematischen Schritt des Verfahrens zur Herstellung der Vorrichtung, bei dem fluidische Anschlüsse hergestellt werden gemäß einem Ausführungsbeispiel;
- Fig. 5: eine schematische Seitenschnittansicht einer Vorrichtung, bei der die fluidischen Anschlüsse durch das Substrat hindurchgeführt sind gemäß einem Ausführungsbeispiel;
- Fig. 6: eine schematische Seitenschnittansicht einer Vorrichtung, bei der die im Zusammenhang mit Fig. 3d beschriebene Beschichtung so ausgeführt wird, so dass nur ein Teil der Partikel auf der der Öffnung zugewandten Seite beschichtet wird, gemäß einem Ausführungsbeispiel;
- Fig. 7: eine schematische Seitenschnittansicht einer Vorrichtung, bei der die Beschichtung, wie sie im Zusammenhang mit der Fig. 4c beschrieben wurde so ausgeführt wird, so dass nur ein Teil der Partikel auf der der Öffnung zugewandten Seite beschichtet wird, gemäß einem Ausführungsbeispiel;
- Fig. 8: eine schematische Seitenschnittansicht einer Vorrichtung, bei der ein zweiter Anteil von Partikeln als Getterpumpe nutzbar ist gemäß einem Ausführungsbeispiel;
- Fig. 9a: eine schematische Seitenschnittansicht einer Vorrichtung, die gegenüber der Vorrichtung aus Fig. 8 derart modifiziert ist, dass eine Kappenstruktur die Aussparung aufweist, gemäß einem Ausführungsbeispiel;
- Fig. 9b: eine schematische Seitenschnittansicht einer Vorrichtung, die gegenüber der Vorrichtung aus Fig. 9a derart modifiziert ist, dass die Aussparung entlang einer Tiefenrichtung eine variable Breite aufweist, gemäß einem Ausführungsbeispiel;
- Fig. 10: ein Array von Säulen, wie es beispielsweise als chromatographische Trennsäule einsetzbar ist gemäß dem Stand der Technik;
- Fig. 11: ein Siliziumchip mit einer geätzten Kanalstruktur gemäß dem Stand der Technik;
- Fig. 12: einen Herstellungsprozess für polysiliziumbasierte Inertialsensoren gemäß dem Stand der Technik;
- Fig. 13a: ein schematisches Blockschaltbild eines miniaturisierten Gas-Chromatographen gemäß dem Stand der Technik;
- Fig. 13b: einen schematischen Querschnitt zur Illustration einer Absorption von Dampf gemäß dem Stand der Technik; und
- Fig. 13c: einen schematischen Querschnitt des Funktionsprinzips der Abgabe der zuvor adsorbierten Partikel des Dampfes gemäß dem Stand der Technik.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Manche der nachfolgend beschriebenen Ausführungsbeispiele beziehen sich auf Reaktoren für chemische oder physikalische Prozesse. Bei den Reaktoren kann es sich beispielsweise um Gas-Chromatographen oder Preconcentrator-Elemente von Gas-Chromatographen handeln. Bei den Reaktoren kann es sich auch um Filter handeln, die ausgebildet sind, um Stoffe, die in einem den Filter durchströmenden Medium enthalten sind, herauszufiltern.

Ferner kann sich ein Reaktor auf eine Vorrichtung zur Energieerzeugung (etwa eine Batterie) beziehen, bei der basierend auf einer Oberflächenreaktion elektrische Energie erzeugt wird. Nachfolgend beschriebene Ausführungsbeispiele beziehen sich ferner auf Reaktoren in Form von Getterpumpen, die ausgebildet sind, um ein Fluid oder Stoffe davon zu binden und so einen Fluiddruck oder eine Stoffkonzentration in einer Kavität zu reduzieren, so dass bspw. vakuumähnliche Bedingungen oder zumindest ein reduzierter (Partial-)Druck in der Kavität vorherrschen.

Fluide, die mit der Vielzahl von Partikeln in Verbindung oder Kontakt gebracht werden, können einen beliebigen, vorzugsweise nicht festen, Zustand aufweisen, d.h. gasförmig und/oder flüssig vorliegen.

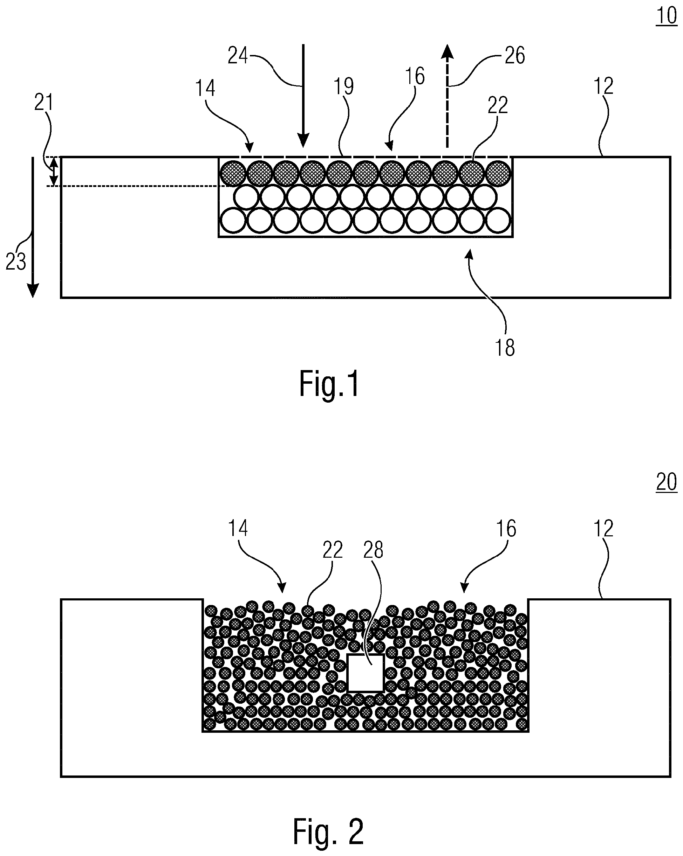

Fig. 1 zeigt eine schematische Seitenschnittansicht einer Vorrichtung 10, die ein Substrat 12 aufweist. Das Substrat 12 umfasst eine Aussparung 14, beispielsweise ein Sackloch, einen Graben oder eine Vertiefung. In der Aussparung 14 ist eine Vielzahl von Partikeln angeordnet. Ein erster Anteil 16 der Partikel ist mittels einer Beschichtung zu einer porösen Struktur 22 verbunden. Ein zweiter Anteil 18 der Partikel ist nicht mittels der Beschichtung verbunden.

Der erste Anteil 16 der Partikel ist näher an einer Öffnung 19 der Aussparung 14 angeordnet als der zweite Anteil 18 der Partikel. Ein Entweichen des zweiten Anteils 18 von Partikeln aus der Aussparung durch die Öffnung 19 derselben ist mittels der porösen Struktur 22, d.h. des ersten Anteils 16 der Partikel verhindert. Die poröse Struktur 22 kann mit dem Substrat 12 fest verbunden sein, etwa indem der erste Anteil 16 und das Substrat 12 eine gleiche Beschichtung aufweisen und die Beschichtung sowohl die Partikel des ersten Anteils 16 untereinander als die poröse Struktur 22 mit dem Substrat 12 verbindet. Alternativ ist ebenfalls vorstellbar, dass die poröse Struktur 22 auf andere Art und Weise mit dem Substrat 12 verbunden wird, beispielsweise durch ein Druck- Press- oder Klebeverfahren.

Die poröse Struktur 22 ist ausgebildet, um ein erstes Fluid 24 in Richtung des zweiten Anteils 18 passieren zu lassen. Dies erfolgt beispielsweise dadurch, dass die poröse Struktur 22 eine Vielzahl von Hohlräumen aufweist, die zumindest teilweise miteinander verbunden sind, so dass das Fluid 24 durch die benachbarten Hohlräume strömen kann. Die Hohlräume können dadurch erhalten werden, dass miteinander in Kontakt gebrachte Partikel dazwischen angeordnete Hohlräume aufweisen, die durch die Beschichtung zumindest teilweise unverschlossen bleiben. Vereinfacht ausgedrückt kann das Fluid 24 durch die poröse Struktur 22 hindurch an den zweiten Anteil 18 der Partikel gelangen.

Der zweite Anteil 18 von Partikeln kann Partikel umfassen, die ausgebildet sind, um mit dem Fluid 24 zu reagieren und/oder um das Fluid 24 oder einen Stoff daraus zu binden. Wird das Fluid 24 lediglich teilweise von den Partikeln gebunden oder erfolgt eine chemische oder physikalische Reaktion, die das Fluid 24 verändert, so kann ein zweites (ggf. verändertes) Fluid 26 die Aussparung 14 durch die poröse Struktur 22 verlassen.

Alternativ kann auch zumindest ein weiteres Fluid durch die poröse Struktur 22 in die Aussparung 14 strömen. Das Fluid 24 und das weitere Fluid können beispielsweise an den Partikeln, insbesondere den Partikeln des zweiten Anteils 18, reagieren. Es ist somit eine Oberflächenreaktion an den Partikeln des zweiten Anteils 18 ermöglicht. Zusätzlich kann, wenn die Beschichtung entsprechende Materialien aufweist, eine Oberflächenreaktion an den Partikeln des ersten Anteils 16 ermöglicht sein. Die Oberfläche, an der die Oberflächenreaktion stattfinden kann ist basierend auf der Vielzahl von Partikeln gegenüber einer planaren Struktur oder einer Säulenstruktur erhöht.

Eine Reaktionseigenschaft der Partikel kann durch ein Material und/oder eine Oberflächeneigenschaft der Partikel bestimmt oder beeinflusst sein. Alternativ oder zusätzlich kann eine entsprechende Material- oder Oberflächeneigenschaft durch die Beschichtung beeinflusst oder ermöglicht (im Gegenzug jedoch auch unterdrückt) werden.

Die Vielzahl von Partikeln, das heißt die zu der porösen Struktur 22 verbundenen Partikel des ersten Anteils 16 und gegebenenfalls unbeschichtete Partikel können in weitergehenden Prozessschritten bezüglich ihrer Reaktionseigenschaften weiter verändert werden. So können beispielsweise katalytisch aktive Substanzen aus einer Lösung oder einer Gasphase auf die Oberfläche der porösen dreidimensionalen Struktur 22 aufgebracht werden, um eine Katalysator-Funktion zu ermöglichen.

Eine Beschichtung des ersten Anteils 16 kann mittels eines beliebigen, dafür geeigneten Verfahrens (Beschichtungsprozesses) ausgeführt werden, beispielsweise eine Atomlagenabscheidung (Atomic Layer Deposition - ALD), einer physikalischen Gasphasenabscheidung (Physical Vapor Deposition - PVD) oder einer chemischen Gasphasenabscheidung (Chemical Vapor Deposition - CVD). Beispielsweise kann im Zuge eines Herstellungsverfahrens eine Vielzahl von Partikeln in die Aussparung 14 angeordnet werden, wobei die Partikel verschiedenartig, aber auch gleichartig sein können. Nachfolgend kann eine Beschichtung des ersten Anteils 16 erfolgen, indem die Beschichtungsparameter entsprechend gewählt werden oder die Beschichtung beendet oder abgebrochen wird, wenn eine hinreichende Anzahl von Partikeln beschichtet ist, so dass der erste Anteil 16 die poröse Struktur 22 bilden kann. Der Beschichtungsprozess kann eine Eindringtiefe 21 aufweisen, die eine Wirksamkeit (Beschichten von Partikeln) des Beschichtungsprozesses von der Öffnung 19 ausgehend entlang einer Tiefenrichtung 23 in die Aussparung 14 hinein beschreibt. Vereinfacht ausgedrückt, sind Partikel des ersten Anteils 16 im Wesentlichen mit einem Abstand zu der Öffnung 19 angeordnet, der geringer oder gleich der Eindringtiefe 21 des Beschichtungsprozesses ist.

Die Partikel des zweiten Anteils 18 können mit einem Abstand zu der Öffnung 19 angeordnet sein, der größer ist, als die Eindringtiefe 21 des Beschichtungsprozesses. Die Einstellung der Eindringtiefe 21 kann eine Einstellung eines Parameters des Beschichtungsprozesses, etwa Druck, Zeit, Temperatur oder dergleichen umfassen. Bspw. kann eine Einstellung der Eindringtiefe 21 so erfolgen, dass für eine Atomlagenabscheidung (Beschichtungsprozess) eine Verweildauer eines ersten oder zweiten Reaktanden so eingestellt wird, dass dieser die Partikel von der Öffnung 19 bzw. einer Deckfläche (Füllstand) der Partikel lediglich bis hin zu der Eindringtiefe 21 durchdringt. Eine Beschichtung erfolgt bspw., indem beide Reaktanden (sequentiell nacheinander) mit dem Partikel in Berührung kommen und sich bspw. an dem Partikel ablagern. Bspw. kann ein Reaktand eingebracht und nicht an Partikeln angeordnete Anteile wieder entfernt (abgesaugt) werden, bevor ein weiterer Reaktand eingebracht wird. Kommen beide Reaktanden mit einander an den Partikeln in Berührung kann dort eine Beschichtung gebildet werden. Wird die Verweildauer so eingestellt, dass zumindest einer der Reaktanden die Eindringtiefe 21 nicht überschreitet, so kann eine Beschichtung von Partikeln, die einen größeren Abstand zu der Öffnung 19 aufweisen, als die Eindringtiefe 21, reduziert oder vermieden werden. Alternativ kann bspw. eine Beschichtungsdauer einer CVD-Abscheidung so eingestellt werden, dass eine Beschichtung von Partikeln mit einem größeren Abstand zu der Öffnung 19 als die Eindringtiefe 21 im Wesentlichen oder Vollständig verhindert ist. Bspw. kann bei Verwendung von Al₂O₃ eine "Eindringtiefe", innerhalb derer die Partikel beschichtet werden, in weiten Grenzen einstellbar sein. Es können Aspektverhältnisse über 1000 erreicht werden.

Das bedeutet, dass eine chemische oder physikalische Eigenschaft des zweiten Anteils 18 der Vielzahl von Partikeln während eines Herstellungsverfahrens im Wesentlichen unverändert bleiben kann.

Das Beschichten kann von einer Seite der Umgebung der Aussparung 14 ausgehend in eine Richtung eines Volumens der Aussparung ausgeführt werden. Das ermöglicht, dass benachbart zu der Öffnung 19 der Aussparung angeordnete Partikel (der erste Anteil 16) beschichtet werden während von der Öffnung 19 beabstandete Partikel unbeschichtet bleiben.

Eine Anzahl von Partikeln des zweiten Anteils kann, verglichen mit einer Anzahl von Partikeln des ersten Anteils, um einen Faktor von zumindest 1, 2, 10 oder größer sein. Das bedeutet, es können mehr unbeschichtete Partikel als beschichtete Partikel angeordnet sein.

Die poröse Struktur 22 bildet eine poröse Membran. Eine Interaktion des zweiten Anteils 18 der Partikel mit dem Fluid 24 (Medium) ist durch die poröse Struktur 22 ermöglicht. Durch das Material des Substrats 12 kann ein Kontakt des Fluids 24 mit dem zweiten Anteil 18 der Partikel im Wesentlichen verhindert sein, das bedeutet, eine Größe der Öffnung 19 der Aussparung 14 kann einen Eintritt und/oder Austritt von Medien hin zu den unbeschichteten Partikeln beeinflussen oder bestimmen.

Bei dem Substrat 12 kann es sich bspw. um ein Hableitermaterial handeln. Bei dem Halbleitermaterial kann es sich bspw. um ein Siliziummaterial oder ein Galliumarsenidmaterial handeln. Alternativ oder zusätzlich kann das Substrat 12 ein Glasmaterial, ein Keramikmaterial, ein Glaskeramikmaterial und/oder ein Kunststoffmaterial umfassen. Das Substrat 12 kann eine Dotierung aufweisen. Bspw. kann das Halbleitermaterial dotiert sein, etwa mit einem Bormaterial. Beispielsweise handelt es sich bei dem Substrat 12 um einen MEMS-Wafer. Das Substrat 12 kann eine planare oder nichtplanare Form (bspw. gekrümmt) aufweisen.

Fig. 2 zeigt eine schematische Seitenschnittansicht einer Vorrichtung 20, bei der der erste Anteil 16 der in der Aussparung 14 angeordneten Partikel alle oder nahezu alle der angeordneten Partikel umfasst. Die Vorrichtung 20 umfasst ein Heizelement 28, das ausgebildet ist, um die Vielzahl von angeordneten Partikeln zu erwärmen. Das Heizelement 28 kann von den Partikeln umschlossen sein. Das ermöglicht, dass ein hoher Anteil einer Oberfläche des Heizelements 28 mit den Partikeln kontaktierbar ist und ein hohes Maß an Wärmeenergie an die Partikel 16 abgegeben wird, wenn das Heizelement 28 aktiviert wird. Das Heizelement 28 kann beabstandet von dem Substrat 12 angeordnet sein. Dies ermöglicht, dass eine direkte Abgabe von Wärmeenergie des Heizelements 28 an das Substrat 12 reduziert oder verhindert ist. Dies ermöglicht eine geringe Erwärmung des Substrats 12 basierend auf einer Aktivierung des Heizelements 28, so dass eine thermische Beeinflussung des Substrats 12 sowie benachbarter Strukturen ebenfalls gering ist.

Ist der erste Anteil 16 beispielsweise konfiguriert, um als Preconcentrator betrieben zu werden, so kann eine Vorrichtung mehrere Aussparungen (Preconcentratoren) aufweisen, in denen jeweils Partikel angeordnet sind. Jede Vielzahl von Partikeln in einer jeweiligen Aussparung kann als Preconcentrator für einen bestimmten Stoff oder eine bestimmte Konzentration eines Stoffes genutzt werden und unabhängig voneinander mit einem Heizelement beheizt werden, um den jeweils angereicherten Stoff abzugeben. Durch eine reduzierte oder geringe wechselseitige thermische Beeinflussung der Preconcentrator untereinander kann ein präziser Betrieb der Vorrichtung(en) erfolgen.

Obwohl die Vorrichtung 20 so beschrieben ist, dass lediglich der erste Anteil 16 von Partikeln angeordnet ist, kann gemäß alternativen Ausführungsbeispielen auch der zweite Anteil von Partikeln angeordnet sein, wie es im Zusammenhang mit Fig. 1 beschrieben ist.

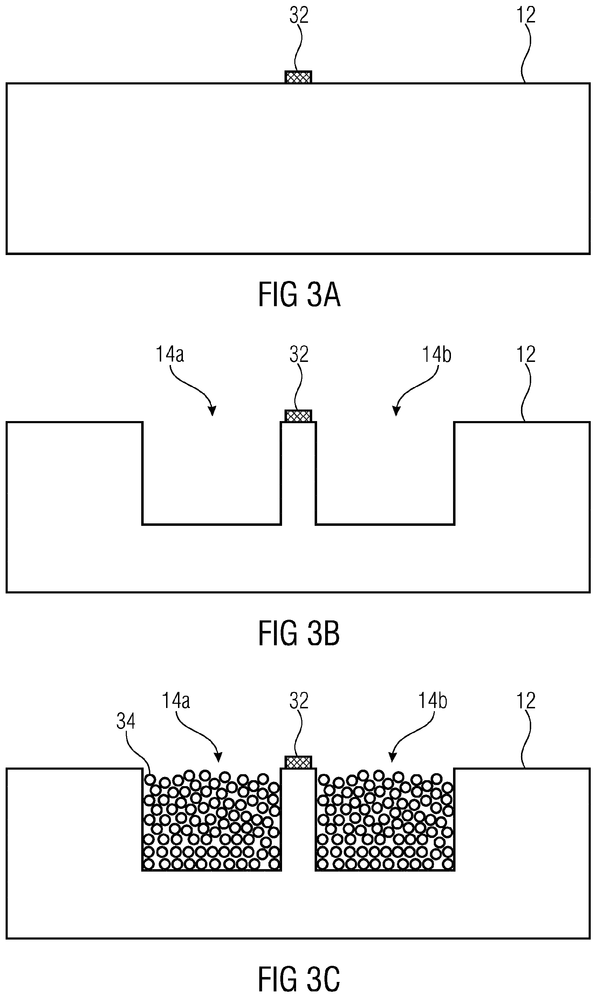

Anhand der nachfolgend beschriebenen Figuren 3a-e wird ein beispielhaftes Herstellungsverfahren zum Herstellen von Vorrichtungen gemäß Ausführungsbeispielen erläutert. In einem ersten Schritt wird das Substrat 12 bereitgestellt. Optional kann ein leitfähiges Element 32 an einer Seite des Substrats 12 angeordnet werden, wobei das leitfähige Element 32 ausgebildet ist, um sich bei einer Aktivierung zu erwärmen. Beispielsweise kann das leitfähige Element 32 ausgebildet sein, um sich zu erwärmen, wenn es von einem elektrischen Strom durchflossen wird. Bei dem leitfähigen Element 32 kann es sich beispielsweise um ein strukturiertes Metall, wie etwa Kupfer, Aluminium, Gold oder dergleichen handeln. Alternativ kann es sich bei dem leitfähigen Element 32 auch um ein dotiertes oder undotiertes Halbleitermaterial handeln. Bei dem Halbleitermaterial kann es sich beispielsweise um Silizium oder Galliumarsenid (GaAs) handeln. Eine Dotierung kann beispielsweise mittels Bor erfolgen.

Sowohl das Substrat als auch das elektrisch leitfähige Element 32 (etwa eine oder mehrere Leiterbahnen) können alternativ oder zusätzlich (zeitlich alternierend oder gleichzeitig) zur Temperaturmessung genutzt werden. Hierfür kann das elektrisch leitfähige Element ein Material mit einem geeigneten Temperaturkoeffizienten aufweisen. Hierfür eignen sich insbesondere Metalle wie etwa Gold oder Platin. In anderen Worten zeigt Fig. 3a eine Abscheidung und Strukturierung eines oder mehrerer Metalle auf einem Siliziumsubstrat, die zur elektrischen Anbindung des Heizers und/oder als Temperatursensor dienen.

Fig. 3b zeigt schematisch eine nachfolgende Anordnung zweier Aussparungen 14a und 14b in dem Substrat 12. Obwohl in Fig. 3b die Anordnung von zwei Aussparungen 14a und 14b gezeigt ist, kann auch lediglich eine Aussparung oder alternativ mehr als zwei Aussparungen angeordnet werden. In anderen Worten zeigt Fig. 3b ein Ätzen einer oder mehrerer Kavitäten in dem Substrat, die eine Form und/oder Abmessungen der Heizelemente und des dreidimensionalen Körpers vorgibt.

Wie in Fig. 3c dargestellt, wird eine erste Vielzahl von Partikeln 34 in die Kavität 14a und eine zweite Vielzahl von Partikeln 34 in die Kavität 14b angeordnet. Vereinfacht ausgedrückt weist das Substrat 12 eine weitere Aussparung 14b auf, in dem eine weitere Vielzahl von Partikeln angeordnet ist. Die in den Aussparungen 14a und 14b angeordneten Partikel können gleiche oder voneinander verschiedene Materialien aufweisen und/oder gleiche oder von einander verschiedene Formen oder Größen aufweisen. In anderen Worten zeigt Fig. 3c ein Einbringen der Partikel, aus denen der dreidimensionale Körper bestehen soll, in die Kavitäten. Die Partikel können zu diesem Zeitpunkt noch lose an- bzw. aufeinander angeordnet sein.

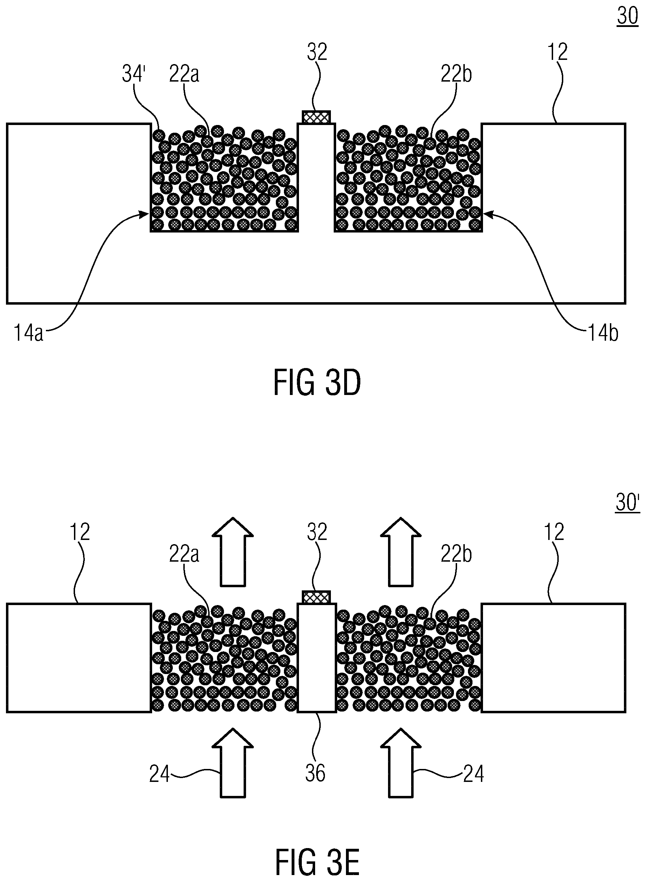

Wie es in Fig. 3d dargestellt ist, werden die Partikel mittels einer Beschichtung beschichtet, wie es durch die gegenüber der Fig. 3c dunkel (ausgefüllte Kreise) dargestellten Partikel 34' angedeutet ist. Eine Vorrichtung 30 umfasst die Partikel, die eine jeweils in der Aussparung 14a bzw. 14b angeordnete poröse Struktur 22a bzw. 22b formen. Das elektrisch leitfähige Element 32 ist dabei an einem Teil des Substrats 12 angeordnet, das die beiden Aussparungen 14a und 14b voneinander beabstandet. Die porösen Strukturen 22a und 22b können jeweils mit dem Substrat 12 verbunden sein. In anderen Worten zeigt Fig. 3d ein Verfestigen der Partikel durch Beschichtung, etwa mit Al₂O₃ mittels ALD. Diese Schicht kann von den Bereichen der Metallstrukturen (leitfähiges Element 32), die der elektrischen Kontaktierung von Heizern und Temperatursensoren dienen, entfernt werden.

Wie es in Fig. 3e dargestellt ist, kann das Substrat 12 teilweise entfernt werden, so dass die porösen Strukturen 22a und 22b an zwei Seiten derselben bezüglich des Substrats 12 kontaktfrei sind. Hierdurch wird die Vorrichtung 30 zu einer Vorrichtung 30' modifiziert. Bei dem entfernten Substrat kann es sich beispielsweise um eine Rückseite eines Wafers handeln, in dem die Vorrichtung gebildet wird. Der Begriff "Rückseite" soll hier keine einschränkende Wirkung entfalten. Es versteht sich, dass je nach Orientierung der Vorrichtung im Raum Begriffe wie "oben", "unten", "links" oder "rechts" sowie die jeweiligen Seiten beliebig vertauschbar sind. Vereinfacht ausgedrückt wird an der Aussparung 14a und an der Aussparung 14b jeweils eine zweite Öffnung erzeugt, so dass das Fluid 24 durch die porösen Strukturen 22a und 22b hindurchfließen kann. Die teilweise Entfernung des Substrats 12 kann beispielsweise dazu führen, dass ein Teil 36 des Substrats 12 bezüglich des verbleibenden Substrats 12 freigelegt wird.

Der verbleibende Teil 36 kann als Heizkörper bezeichnet werden, wenn das elektrisch leitfähige Element 32 ausgebildet ist, um basierend auf einem elektrischen Strom, der das elektrisch leitfähige Element 32 durchfließt, einer Wärmeenergie abzugeben. Die Entfernung des Substrats 12 ermöglicht ferner eine elektrische Isolierung des Heizkörpers 36 und mithin des leitfähigen Elements 32 von dem Substrat 12. Eine Aktivierung des leitfähigen Elements 32 kann zu einer Erwärmung des Heizkörpers 36 führen, der ausgebildet ist, um eine Wärmeenergie von dem elektrisch leitfähigen Element 32 aufzunehmen und an die porösen Strukturen 22a und 22b abzugeben. Der Heizkörper 36 und das elektrisch leitfähigen Element 32 sind somit von dem verbleibenden Substrat 12 mittels der porösen Strukturen 22a und 22b beabstandet. Vereinfacht ausgedrückt ist das Heizelement 32 bezüglich der Partikel angeordnet, das bedeutet, es ist ausgebildet, um die Vielzahl von Partikeln (poröse Strukturen 22a und 22b) mittels des Heizkörpers 36 zu erwärmen. Eine Erwärmung der Partikel ist größer als eine Erwärmung des Substrats. Wie es im Zusammenhang mit Fig. 2 beschrieben ist, kann das Heizelement auch derart bezüglich der Vielzahl von Partikeln angeordnet sein, dass es einen direkten Kontakt mit den Partikeln aufweist und die Partikel direkt erwärmt.

Alternativ ist ebenfalls vorstellbar, dass es sich bei den porösen Strukturen 22a und 22b um ein einstückiges Element handelt, etwa wenn der Heizkörper 36 eine Inselstruktur ist, die von den Partikeln der porösen Struktur umschlossen ist. In anderen Worten zeigt Fig. 3e ein Entfernen des Siliziums von der Rückseite des Substrats, beispielsweise durch Schleifen und/oder Polieren, bis die poröse dreidimensionale Struktur (poröse Struktur) freigelegt ist, so dass ein Fluid die dreidimensionale Struktur von einer Seite zur anderen (etwa von oben nach unten oder umgekehrt) durchströmen kann. Zusammengefasst zeigen die Fig. 3a-e eine Herstellung einer porösen dreidimensionalen (3D-)Struktur mit eingebetteten Heizern bzw. Temperatursensoren auf einem Siliziumsubstrat.

Der Heizkörper 36 kann aus dem Substratmaterial selbst bestehen und wird beispielsweise in seinen lateralen Abmessungen beim Ätzen der Kavität für die einzubringenden Partikel vorgegeben. Zur elektrischen Kontaktierung des Heizers werden auf dem Substrat 12 Anschlusspads und/oder Leiterbahnen aus leitfähigem Material (beispielsweise Metall) angeordnet. Das Anordnen kann vor dem Ätzen oder nach dem Ätzen erfolgen. Zum Schluss kann das Silizium von der Rückseite her entfernt werden, wie es in Fig. 3e dargestellt ist. Dadurch wird zum einen ermöglicht, dass die poröse 3D-Struktur entlang einer Richtung (beispielsweise senkrecht) von dem Fluid 24 durchströmt werden kann. Zum anderen wird das in die 3D-Struktur (poröse Struktur 22) eingebettete Heizelement thermisch und elektrisch vom Substrat 12 getrennt.

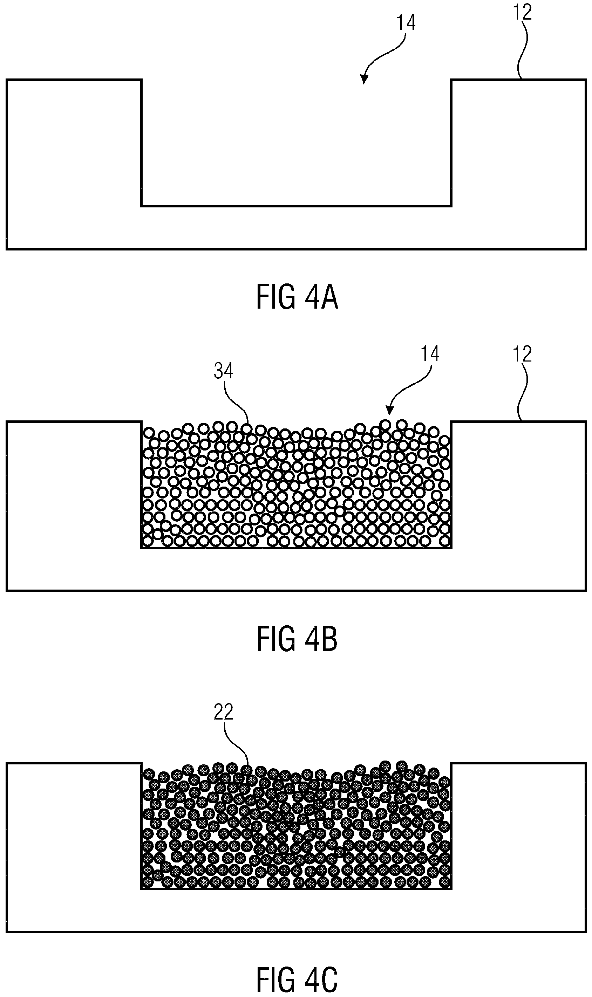

Die Fig. 4a-f zeigen schematisch ein Verfahren zum Herstellen einer Vorrichtung 40. Wie es in Fig. 4a dargestellt ist, wird die Aussparung 14 in das Substrat 12 geformt, etwa mittels eines Ätzprozesses. Anschließend erfolgt, wie es in Fig. 4b dargestellt ist, eine Anordnung von gegebenenfalls losen Partikel 34 in die Aussparung 14. Wie es in Fig. 4c dargestellt ist, wird mittels der Beschichtung der Partikel die poröse Struktur 22 erhalten.

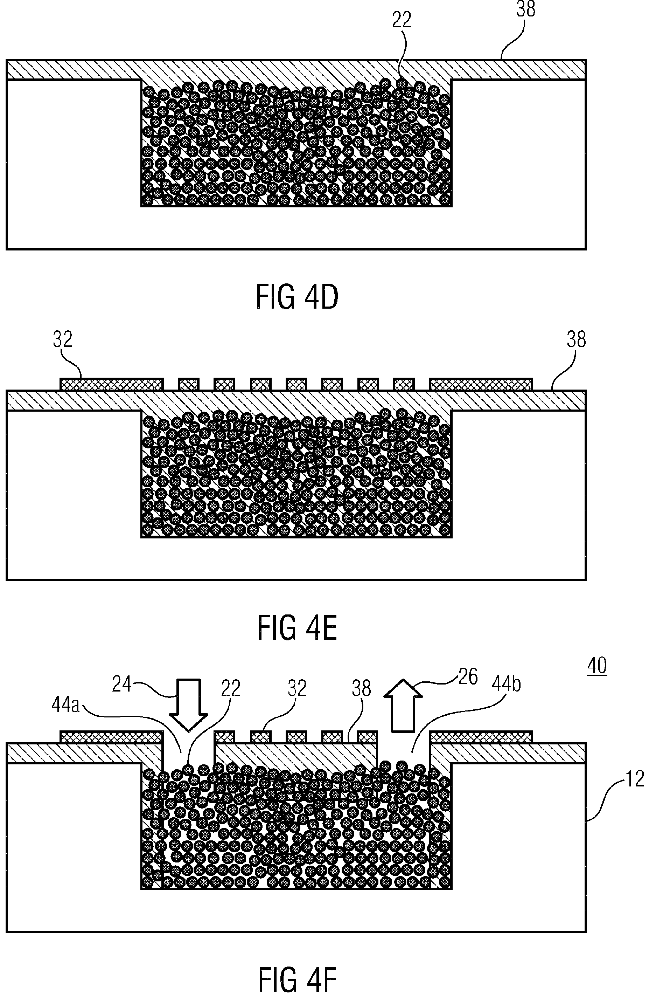

Wie es in Fig. 4d dargestellt ist, wird an der Öffnung der Aussparung an der poröse Struktur 22 eine Materialschicht 38 angeordnet, die sich flächig über die poröse Struktur 22 erstreckt. Eine der porösen Struktur 22 abgewandte Seite der Materialschicht 38 weist verglichen mit der porösen Struktur 22 eine verringerte Unebenheit auf. Vereinfacht ausgedrückt ist die der porösen Struktur 22 abgewandte Seite der Materialschicht 38 eben. Die Materialschicht 38 kann mittels geeigneter Abform- oder Abscheideverfahren angeordnet werden. Die angeordnete Materialschicht 38 kann mit einer nachfolgenden Bearbeitung, wie etwa einem Schleifprozess oder einem Polierprozess so bearbeitet werden, dass sie eine geringe Oberflächenrauheit aufweist. Die Materialschicht 38 kann elektrisch isolierende Materialien umfassen, wie etwa ein Harz oder ein undotiertes Halbleitermaterial. Alternativ oder zusätzlich kann die Materialschicht 38 einen Kunststoff umfassen. Dies ermöglicht den Erhalt einer passivierenden Eigenschaft der Materialschicht 38.

Wie es in Fig. 4e dargestellt ist, kann ein oder mehrere elektrisch leitfähige Elemente 32 an der Materialschicht 38 angeordnet werden. In anderen Worten zeigt Fig. 4e eine Abscheidung und Strukturierung eines oder mehrerer Metalle auf der planarisierten 3D-Struktur, wobei das oder die Metalle als Heizelement und/oder als Temperatursensor genutzt werden können.

Anschließend können, wie es in Fig. 4f dargestellt ist, fluidische Anschlüsse 44a und 44b hergestellt werden, etwa indem die Materialschicht 38 und gegebenenfalls das oder die elektrisch leitfähigen Elemente 22 bereichsweise entfernt werden, so dass das Fluid 24 hin zu der porösen Struktur 22 und/oder das Fluid 26 weg von der porösen Struktur 22 fließen kann. Verbleibende Bereiche der Materialschicht 38 können als Heizkörper nutzbar sein.

Obwohl eine thermische Ankopplung des elektrisch leitfähigen Elements 32 mittels der Materialschicht 38 gegenüber einer thermischen Kopplung, wie sie im Zusammenhang mit Fig. 3e beschrieben ist, reduziert sein kann, ermöglicht die Anordnung des elektrisch leitfähigen Elements 32 an der Materialschicht weitere Freiheitsgrade während der Herstellung der Vorrichtung 40. So kann beispielsweise eine beliebige Struktur des oder der elektrischen leitfähigen Element(e) 32 erzeugt werden. Insbesondere ermöglicht die Anordnung der Materialschicht 38 eine flächige Anordnung des oder der elektrisch leitfähigen Element(e) 32 bezüglich der porösen Struktur 22.

In anderen Worten wird das Heizelement durch planare Metallstrukturen (elektrisch leitfähiges Element 32) gebildet, die auf die poröse 3D-Struktur 22 nach Abscheidung der Passivierungsschicht und deren optionaler Planarisierung aufgebracht wird. Gegenüber einer Kontaktierung der porösen Struktur 22 mittels des in den Fig. 3a-e beschriebenen Heizkörpers kann eine thermische Ankopplung an die poröse 3D-Struktur 22 verringert sein, eine Isolation vom Trägersubstrat 12 ist jedoch weiterhin gegeben, ohne dass das Trägersubstrat auf der Rückseite abgetragen werden muss. Es können sich eine erhöhte Anzahl von Freiheitsgraden bezüglich des Substratmaterials, der Geometrie von Heizer und Temperatursensor sowie der Anordnung von Ein- und Auslass, das bedeutet der fluidischen Anschlüsse 44a und 44b, ergeben. Eine thermische Leitfähigkeit der porösen Struktur 22 kann verglichen mit einer thermischen Leitfähigkeit eines Materials, aus dem die Partikel bestehen, geringer sein. Eine großflächige Anordnung von Heizkörpern, etwa durch den Heizkörper 36 oder die Materialschicht 38 zwischen den fluidischen Anschlüssen 44a und 44b ermöglicht eine hohe Übertragung von Wärmeenergie hin zu der porösen Struktur 22 (Aufheizen derselben) oder hin zu dem elektrisch leitfähigen Element 32 (Sensieren der Temperatur der porösen Struktur 22).

Die Materialschicht 38 und/oder das elektrisch leitfähige Element 32 kann auch entlang lateraler Bereiche des Substrats 12 angeordnet sein, die außerhalb der Aussparung 14 angeordnet sind. Dies ermöglicht beispielsweise das Erwärmen des umliegenden Substrats 12 oder das Sensieren einer Temperatur der umliegenden Bereiche, etwa wenn eine thermische Isolierung des Substrats 12 von benachbarten Bereichen nicht erforderlich ist.

In anderen Worten beschreiben die Fig. 3a-e und 4a-f Möglichkeiten einer Integration von Heizelementen und Temperatursensoren sowie fluidischer Anschlüsse mit einem porösen 3D-Körper zur Herstellung miniaturisierter Reaktionskammern mit großer innerer Oberfläche. Die Reaktionskammer kann beispielsweise durch die miteinander verbundenen Hohlräume zwischen den Partikeln der porösen Struktur 22 und gegebenenfalls weiterer, nicht beschichteter, Partikel erfolgen.

Gegenüber vollständig beschichteter poröser Strukturen, wie sie aus WO 2012/104106 A1 bekannt sind, ist eine Anordnung eines Heizelements bzw. Heizkörpers oder eines Temperatursensors vorteilhaft, da Prozessparameter exakt beeinflusst werden können und/oder mit einer hohen Präzision nachverfolgt werden können, so dass eine präzise Prozesssteuerung ermöglicht ist.

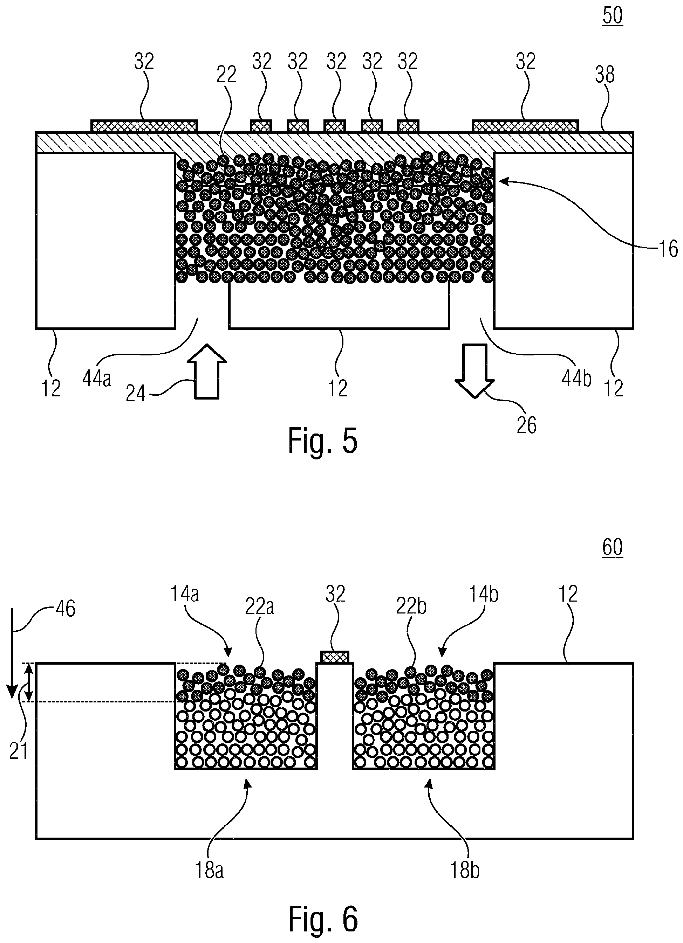

Fig. 5 zeigt eine schematische Seitenschnittansicht einer Vorrichtung 50, bei der verglichen mit der Vorrichtung 40 aus Fig. 4f die fluidischen Anschlüsse 44a und 44b durch das Substrat 12 hindurchgeführt sind. Die Materialschicht 38 kann in einem großen Flächenbereich angeordnet sein, so dass sie die poröse Struktur 22 in einem erhöhten Umfang bedeckt. Dies ermöglicht eine Anordnung des oder der elektrisch leitfähigen Element(e) 32 an einer größeren Fläche. Alternativ oder zusätzlich können weitere fluidische Anschlüsse angeordnet werden, wobei die weiteren fluidischen Anschlüsse auch durch die Materialschicht 38 hindurchgeführt werden können.

Die fluidischen Anschlüsse 44a und/oder 44b können beispielsweise durch Trockenätzen erzeugt werden. Hierfür kann eine Lackmaske an dem Substrat 12 angeordnet werden, die eine Abmessung der fluidischen Anschlüsse 44a und 44b beeinflusst.

Durch weitere Maßnahmen kann die Oberfläche der vorangehend beschriebenen porösen MEMS-Strukturen sowohl nach Fertigstellung als auch während des Herstellungsprozesses gezielt für verschiedene Anwendungen funktionalisiert werden. Zum Beispiel können mittels ALD oder vergleichbarer Verfahren, wie etwa MLD, zusätzliche Schichten abgeschieden werden. ALD erlaubt die Abscheidung vieler Metalloxide, aber auch -nitride und edler Metalle wie Ruthenium oder Platin. MLD macht die Abscheidung hybrider organischanorganischer Schichten möglich. Durch eine entsprechende, bevorzugt nasschemische Behandlung kann das Benetzungsverhalten der Oberfläche eingestellt werden. Eine MEMS-Struktur, wie sie beispielsweise in Fig. 5 dargestellt ist, kann z.B. als chromatographische Säule genutzt werden, nachdem die Oberfläche der porösen Struktur 22 hydrophobisiert wurde. Ferner kann die MEMS Struktur 50 auch als chromatographische Säule nutzbar sein, wenn sie ohne die elektrisch leitfähigen Elemente 32 ausgeführt wird. eine Beheizung der Partikel zur Freisetzung der an den Partikeln gebundenen Stoffe kann von extern erfolgen.

Das bedeutet, dass der erste Anteil 16 von Partikeln von einer thermisch leitfähigen Schicht (Materialschicht 38) bedeckt ist. Ein oder mehrere Heizelemente (elektrisch leitfähiges Element 32) sind mittels der Materialschicht 38 mit dem ersten Anteil 16 verbunden. Das oder die Heizelemente sind ausgebildet, um die Materialschicht 38 zu erwärmen, wobei die Wärmeenergie zumindest teilweise an den ersten Anteil 16 der Partikel weitergegeben wird, um diese zu erwärmen. Eine so erzielte Erwärmung der Partikel kann größer sein als eine Erwärmung des Substrats 12, das bedeutet, es kann eine thermisch reduzierte Kopplung oder gar Entkopplung des gezeigten Substrats 12 von weiteren Bereichen des Substrats erhalten werden.

Die Vielzahl von Partikeln können vor oder nach der Beschichtung ein Konzentratormaterial oder mehrere Konzentratormaterialien umfassen, das ausgebildet ist, um mindestens einen Stoff aus der Umgebung der Aussparung zu binden. Bspw. können die unbeschichteten Partikel oder zumindest Teile davon aus dem Kontzentratormaterial bestehen. Alternativ oder zusätzlich kann auch die Beschichtung das Konzentratormaterial umfassen.

Bei einer Erwärmung der Partikel basierend auf dem oder den Heizelementen kann der gebundene Stoff aus der Umgebung basierend auf der Erwärmung abgegeben werden.

Alternativ oder zusätzlich kann die Vorrichtung 50 als chromatographische Säule nutzbar sein und bspw. benachbart zu einer als Preconcentrator betriebenen Vorrichtung 10, 20, 30 oder 30' angeordnet sein. Von dem Preconcentrator abgegebene Materialien (gebundene Stoffe) können durch die fluidischen Anschlüsse an die Partikel der Vorrichtung der chromatographischen Säule (etwa die Vorrichtung 50) gelangen und analysiert werden. Der Preconcentrator und die chromatographische Säule können bspw. auf oder an einem gemeinsamen Substrat oder Chip angeordnet werden. Vereinfacht ausgedrückt kann die Vorrichtung 50 als chromatographische Säule genutzt werden und ein Preconcentrator vergeschaltet werden.

Ferner kann eine Vielzahl (d. h., zwei oder mehr) Preconcentratoren mit einer chromatographischen Säule kombiniert werden, wobei zumindest ein Preconcentrator Partikel und/oder ein Konzentratormaterialien zum Konzentrieren zumindest zweier Stoffe umfassen kann. Zumindest ein Preconcentrator kann eine weitere Aussparung mit weiteren Partikeln umfassen, so dass in einer ersten Aussparung ein erster Stoff und in einer zweiten Aussparung ein zweiter Stoff konzentriert werden kann.

In anderen Worten kann ein Chromatograph eine Trennung verschiedener Stoffe in einem Gemisch ermöglichen, wobei die Stoffe unterschiedlich stark von dem zumindest einem Konzentratormaterial adsorbiert werden und die Säule des Chromatographen dementsprechend unterschiedlich schnell passieren. Das zumindest eine Konzentratormaterial kann ausgebildet sein, um einen oder mehrere Stoffe möglichst vollständig zu adsorbieren und dann schlagartig freigeben, um sie der chromatographischen Säule zuzuführen, in der dann die Trennung erfolgt. Der Konzentrator kann die Konzentration der nachzuweisenden Substanzen im dem Gas, das die Säule passiert, erhöhen. Dies ist vorteilhaft bei einer geringen Trennleistung etwa mikromechanischer Säulen. Ein weiterer Vorteil ist bspw. die generelle Erhöhung der Nachweisgrenze (d. h., der minimalen Konzentration, die in einem Gas nachweisbar ist).

Fig. 6 zeigt eine schematische Seitenschnittansicht einer Vorrichtung 60, wie sie beispielsweise erhalten werden kann, wenn die im Zusammenhang mit Fig. 3d beschriebene Beschichtung so ausgeführt wird, dass durch die Beschichtung der Partikel bis hin zur Eindringtiefe 21 eine hinreichende Anzahl von Partikeln beschichtet ist und die poröse Struktur 22a und/oder 22b eine hinreichende Ausdehnung entlang einer Tiefenrichtung 46 von der Öffnung der Aussparung 14a bzw. 14b hin zu einer gegenüberliegenden Seite des Substrats 12. Vereinfacht ausgedrückt, nimmt die Ausdehnung der poröse Strukturen 22a und 22b mit zunehmender Eindringtiefe (ggf. Verweildauer von Reaktanden und/oder Beschichtungsdauer) und entlang der Tiefenrichtung 46 zu. Die porösen Strukturen 22a und 22b können, wie es im Zusammenhang mit Fig. 1 beschrieben ist, als steife poröse Membranen verstanden werden. Die Partikel der zweiten Anteile 18a und 18b können als lose, unbeschichtete Partikel vorliegen, so dass die Oberflächeneigenschaft bzw. Materialeigenschaft der Partikel der zweiten Anteile 18a bzw. 18b für die jeweilige Reaktion der Vorrichtung 60 bestimmend ist oder zumindest einen Beitrag liefert.

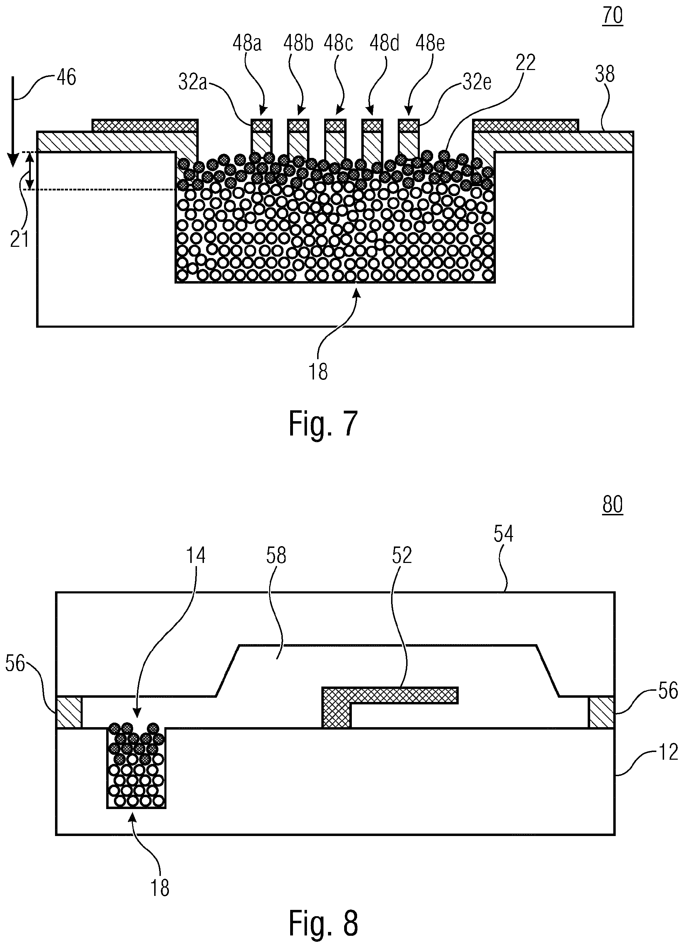

Fig. 7 zeigt eine schematische Seitenschnittansicht einer Vorrichtung 70, wie sie beispielsweise erhalten werden kann, wenn die Beschichtung, wie sie im Zusammenhang mit der Fig. 4c beschrieben wurde, so ausgeführt wird, dass die poröse Struktur 22 durch die Beschichtung der Partikel bis hin zur Eindringtiefe 21 eine Hinreichende Ausdehnung entlang der Tiefenrichtung 46 aufweist. Die Materialschicht 38 und elektrisch leitfähige Elemente 32a-e können ferner, verglichen mit der Vorrichtung 40 aus Fig. 4f, weitere Öffnungen aufweisen, so dass eine Vielzahl von fluidischen Öffnungen entsteht bzw. eine großflächige Durchdringung der porösen Struktur 22 durch das Fluid ermöglicht ist. Die elektrisch leitfähigen Elemente 32a-e können jeweils an einem Abschnitt der Materialschicht 38 angeordnet sein und mit diesen ein Heizelement 48a-e bilden.

In anderen Worten ist es für manche Anwendungen vorteilhaft oder erforderlich, die ursprüngliche Oberfläche der Partikel bzw. deren physikalische oder chemische Eigenschaft zumindest teilweise zu erhalten. Bei den in den Fig. 2, 3a-f, 4a-e und 5 beschriebenen Vorgängen oder Prozessen werden die eingebrachten Partikel jedoch großteils oder vollständig, d.h. gegebenenfalls bis zum Boden der Kavität (Aussparung) beschichtet bzw. miteinander verbunden. Wird der Beschichtungsprozess (insbesondere die Verweilzeit der Reaktanten) modifiziert, so kann erreicht werden, dass die eingebrachten Partikel lediglich bis zu einer bestimmten Tiefe beschichtet werden.

Ein Herausfallen der nicht-beschichteten, d.h. losen Partikel kann verhindert werden, indem die poröse Struktur mit dem Substrat 22 verbunden wird oder ein Lösen der porösen Struktur 22 von dem Substrat verhindert wird. Dadurch kann erreicht werden, dass Materialien in Pulverform, d.h. der zweite Anteil der Partikel, in einen miniaturisierten Container, d. h., der Aussparung, so eingeschlossen werden, dass die unbeschichtet gebliebenen Partikel durch den verfestigten Bereich mit dem Umgebungsmedium in Wechselwirkung treten können. Der Herstellungsprozess entspricht teilweise Prozessen, wie sie im Zusammenhang mit den Fig. 3a-e und 4a-f beschrieben wurden, jedoch mit dem Unterschied, dass die eingebrachten Partikel in den entsprechenden Schritten jeweils nur oberflächlich beschichtet werden. Um eine vorzeitige Interaktion der reaktiven Partikel mit der Umgebung zu vermeiden, können dabei ALD-Prozesse verwendet werden, die auch bei niedrigen Temperaturen eine hohe Wirksamkeit aufweisen, wie es beispielsweise für Al₂O₃ der Fall ist.

Die Fig. 6 und 7 zeigen die zu den Fig. 3d bzw. 4f analogen, zumindest teilweise fertiggestellten MEMS-Strukturen. Der Kontakt zwischen den unbeschichteten Partikeln und einer Umgebung der Aussparung ist in beiden Fällen lediglich durch die poröse Membran hindurch möglich. Das Entfernen des Trägersubstrats, wie es im Zusammenhang mit Fig. 3e beschrieben wurde, entfällt beispielsweise. Die eingebetteten Heizer 48a-e können daher mit dem Trägersubstrat verbunden bleiben. Eine thermische Entkopplung zwischen den Heizelementen 48a-e und anderen Bereichen des Substrats 12 kann, wie vorangehend beschrieben, durch zusätzliche Prozessschritte erreicht werden. Alternativ oder zusätzlich können die Vorrichtungen 60 und/oder 70 ferner fluidische Anschlüsse durch das Substrat 12 hindurch zu den Partikeln des zweiten Anteils 18 bzw. 18a und/oder 18b aufweisen. Alternativ oder zusätzlich kann der zweite Anteil 18 bzw. 18a und/oder 18b durch einen fluidischen Anschluss hindurch teilweise beschichtet werden, um eine weitere poröse Struktur im Bereich des fluidischen Anschlusses zu erhalten und so ein Entweichen des zweiten Anteils von Partikeln durch den fluidischen Anschluss zu verhindern.

Bei den Partikeln kann es sich beispielsweise um einen Adsorbenten in Pulverform, etwa Carbopack, oder andere Partikel handeln. Unter Verwendung von Carbopack kann eine MEMS-Struktur beispielsweise als Preconcentrator für einen miniaturisierten Gas-Chromatographen genutzt werden. Durch sequenzielles Befüllen benachbarter Kavitäten mit unterschiedlichen Adsorbenten kann ein Adsorber-Array realisiert werden. Eine thermische Isolation benachbarter Kavitäten und/oder ein unabhängiges Beheizen der Partikel innerhalb der jeweiligen Kavität ermöglichen unabhängig voneinander ein weitgehend unabhängiges Beheizen der einzelnen Array-Elemente, was eine Analyse komplexer Fluidgemische ermöglicht.

Alternativ oder zusätzlich kann auch eine chemische Reaktion mit der in dem jeweiligen Mikro-Container eingeschlossenen Substanzen (Partikel) ausgelöst werden. Beispielsweise kann durch einen gezielten Kontakt mit Feuchtigkeit bzw. Flüssigkeiten oder Gasen eine entsprechende chemische Reaktion erhalten werden. So kann beispielsweise basierend auf einer chemischen Reaktion eine elektrische Energie erhalten werden, etwa wenn eine vorangehend beschriebene Vorrichtung als Batterie, etwa eine Zink-Luftbatterie eingesetzt wird, die durch Zufuhr eines alkalischen Elektrolyten aktiviert wird. Das bedeutet, dass die Vielzahl von Partikeln ausgebildet sein kann, um zumindest einen Stoff zu binden und den Stoff mit einem Medium, das mit der Vielzahl von Partikeln in Verbindung oder in Kontakt gebracht wird, chemisch oder physikalisch reagieren zu lassen.

Eine weitere Anwendung der in den Fig. 6 und 7 dargestellten Strukturen liegt im Bereich miniaturisierter Getterpumpen. So sind Titan (Ti)- und Zirkonium (Zr)-basierte Getter bekannt, die in Form von aufgebrachten Schichten verwendet werden. Mittels der in den Fig. 6 und 7 beschriebenen Vorrichtungen kann eine wirksame Oberfläche der Gettermaterialien gegenüber einer flächigen Anordnung erhöht werden, was zu einem geringen Bauraumbedarf für das Gettermaterial und/oder zu einem verringerten Raum- oder Oberflächenbedarf des Getters auf dem Substrat führt.

Fig. 8 zeigt eine schematische Seitenschnittansicht einer Vorrichtung 80, bei der der zweite Anteil 18 von Partikeln als Getterpumpe nutzbar ist. Die Vorrichtung 18 umfasst das Substrat 12, in das die Aussparung 14 eingebracht ist. Bei dem Substrat 12 handelt es sich beispielsweise um einen MEMS-Wafer. Die Vorrichtung 80 umfasst ferner eine MEMS-Struktur 52, die an dem Substrat 12 angeordnet ist und eine MEMS-Funktion bereitstellt. Beispielsweise kann es sich bei der MEMS-Struktur um eine seismische Masse handeln, so dass die Vorrichtung 80 als Inertialsensor einsetzbar ist. Alternativ kann die MEMS-Struktur auch ein Aktuator oder Sensor sein.

An dem Substrat 12 ist eine Kappenstruktur 54 angeordnet. Die Kappenstruktur 54 kann mittels einer Versiegelung 56 mit dem Substrat 12 verbunden sein. Bei der Versiegelung 56 kann es sich um ein Adhesiv (Klebstoff) oder dergleichen handeln, mit dem die Kappenstruktur 54 und das Substrat 12 verklebt werden. Alternativ können die Kappenstruktur 54 und das Substrat 12 auch miteinander gebondet werden.

Das Substrat 12, die Kappenstruktur 54 und die Versiegelung 56 umschließen die MEMS-Struktur 52, so dass ein inneres Volumen (Kavität) 58 der Vorrichtung 80 entsteht, in dem die MEMS-Struktur 52 angeordnet ist. Die Öffnung der Aussparung 14 grenzt an die Kavität 58 der Vorrichtung 80 an. Zumindest der zweite Anteil 18 der Partikel ist ausgebildet, um ein in der Kavität 58 befindliches Fluid (beispielsweise Luft) zu binden, um in der Kavität 58 ein Vakuum oder zumindest einen Unterdruck zu erzeugen. Alternativ kann der zweite Anteil 18 von Partikel ausgebildet sein, um einen bestimmten Stoff aus der Kavität zu extrahieren, etwa um eine Korrosion oder andere Wechselwirkungen zwischen dem Stoff und der MEMS-Struktur 52 zu verringern.

Die Kappenstruktur 54 kann beispielsweise aus dem gleichen Material gebildet sein wie das Substrat 12. Vereinfacht ausgedrückt kann die Kappenstruktur 54 ein weiteres Substrat sein.

Das bedeutet, die Vielzahl von Partikeln kann ausgebildet sein, um Gasmoleküle zu binden. Die Kavität kann somit gegenüber einer Umgebung der Vorrichtung 80 abgedichtet sein. Die Vielzahl von Partikeln kann ausgebildet sein, um in der Kavität nach der Abdichtung angeordnete Gasmoleküle zu binden, so dass ein Gasdruck innerhalb der Kavität bezogen auf einen Gasdruck außerhalb der Vorrichtung 80 reduziert ist.

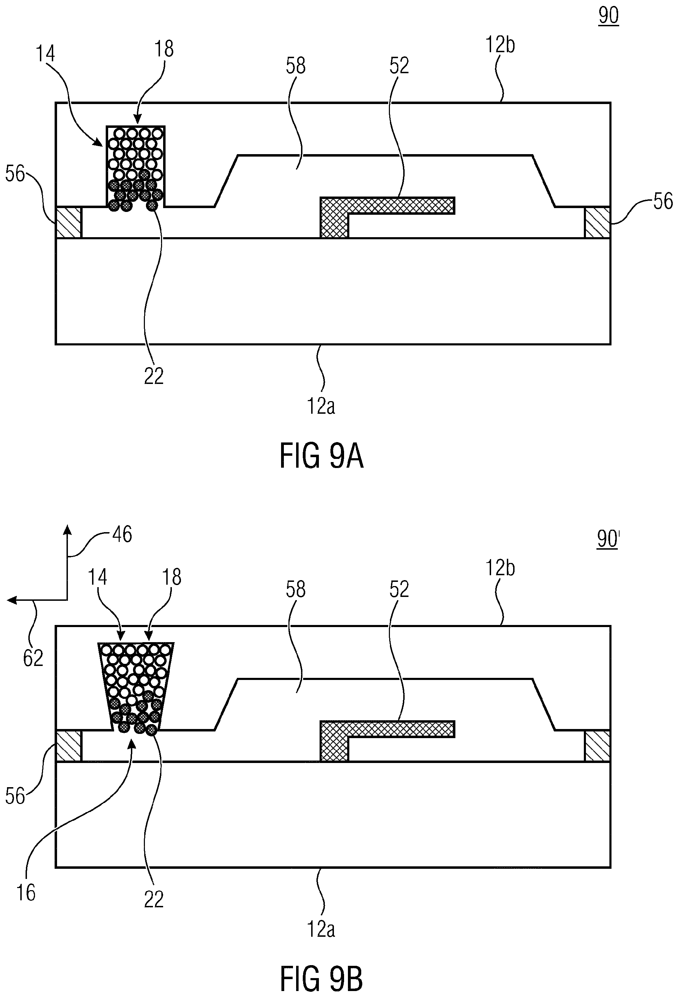

Fig. 9a zeigt eine schematische Seitenschnittansicht einer Vorrichtung 90, die gegenüber der Vorrichtung 80 derart modifiziert ist, dass die Kappenstruktur durch ein Substrat 12b gebildet wird, das die Aussparung 14 aufweist. Vereinfacht ausgedrückt ist die Kappenstruktur ein Substrat und weist die Getterpumpe auf. Eine mechanisch feste Verbindung der porösen Struktur 22 mit dem Substrat 12b ermöglicht ein Verhindern eines Herausrieselns des zweiten Anteils 18 aus der Kavität 14. Beispielsweise kann die Vorrichtung 90 so im Raum positioniert sein, dass die Gravitationskraft die Partikel des zweiten Anteils 18 in Richtung der Kavität 58 zieht. Die poröse Struktur 22 kann beispielsweise mittels der Beschichtung mit dem Substrat 12b mechanisch fest verbunden werden. Alternativ kann die poröse Struktur 22 beispielsweise auch in die Öffnung der Aussparung 14 gedrückt (gepresst) werden, so dass resultierende mechanische Kräfte ein Herausfallen der porösen Struktur 22 aus der Aussparung 14 verhindern.

Fig. 9b zeigt eine schematische Seitenschnittansicht einer Vorrichtung 90', die gegenüber der Vorrichtung 90 aus Fig. 9a derart modifiziert ist, dass die Aussparung 14 eine variable Abmessung entlang einer lateralen Richtung 62 senkrecht zu der Tiefenrichtung 46 aufweist. Die Aussparung 14 ist so konfiguriert, dass sie sich in Richtung der Kavität 58 verjüngt. Die poröse Struktur 22 kann eine Abmessung entlang der lateralen Richtung 62 aufweisen, die größer oder gleich ist als die Abmessung der Öffnung der Aussparung 14 entlang der lateralen Richtung 62.

Basierend auf der Verjüngung der Aussparung 14 wird ermöglicht, dass ein Herausfallen oder Hindurchgelangen der porösen Struktur 22 durch die Öffnung der Aussparung 14 hindurch verhindert ist. So kann auf eine Befestigung der porösen Struktur 22 an dem Substrat 12b mittels der Beschichtung verzichtet werden. Eine Bewegung der porösen Struktur 22 kann in eine Richtung parallel zu der Tiefenrichtung 46 durch den zweiten Anteil 18 der Partikel und in eine entgegengesetzte Richtung durch die Verjüngung der Aussparung 14 verhindert oder zumindest eingeschränkt sein. Bei einem gleichen Volumen der Aussparung 14 kann eine Abmessung der Öffnung der Aussparung reduziert sein. Verglichen mit der Vorrichtung 90 kann die Getterpumpe, d.h. der zweite Anteil 18 in einem größeren Volumen angeordnet sein, selbst wenn eine Anzahl von beschichteten Partikeln, d.h. des ersten Anteils 16 gleich oder reduziert ist. Dies ermöglicht eine hohe Kapazität der Getterpumpe, d.h. es kann ein hohes Maß an Fluid oder Stoff aus der Kavität 58 abgesaugt (gebunden) werden.

In anderen Worten zeigen die Fig. 8, 9a und 9b eine einfache Möglichkeit der Integration einer partikelbasierten Getterpumpe in ein MEMS-System. Die Getterpumpe (d.h. die Getter-Funktion) kann durch eine externe Erhitzung der Partikel aktiviert werden. Alternativ ist ebenfalls vorstellbar, dass die Vorrichtung 80, 90 oder 90' ein Heizelement und/oder einen Heizkörper aufweist, um unabhängig von äußeren Temperaturen aktiviert zu werden. Die Getteraktivierung kann durch eine Temperierung nach dem Waferbonden erfolgen. Eine Getterpumpe mit integriertem, thermisch vom Substrat isolierten Heizer, wie für vorangehende Ausführungsbeispiele beschrieben, kann eine wiederholte Getteraktivierung auf Chipebene erlauben, ohne dass das gesamte MEMS-System aufgeheizt wird. Dank der großen Fläche und dem großen Volumen der in der Kavität eingeschlossenen Partikel ist ein wesentlich höheres Absorptionsvermögen verglichen mit planaren Strukturen, insbesondere Getter-Dünnschichten ermöglicht.

Obwohl in vorangegangenen Ausführungsbeispielen Heizelemente und/oder ein Heizkörper so beschrieben wurden, dass sie benachbart zu oder an der porösen Struktur angeordnet sind, ist ebenfalls vorstellbar, dass ein Heizelement und/oder ein Heizkörper von unbeschichteten Partikeln umgeben wird.

Alternativ oder zusätzlich kann bezüglich der Aussparung 14 und/oder der Kavität 58 eine oder mehrere weitere Sensoren angeordnet sein. Die Sensoren können ausgebildet sein, um einen Parameter der Vielzahl von Partikeln, (etwa eine Temperatur, einen Druck oder eine Bewegung) einen Parameter der Kavität (etwa eine Temperatur, einen Füllstand, den das Fluid in der Kavität aufweist) eine Art des Mediums, mit dem die Kavität 14 zumindest teilweise gefüllt ist, oder dergleichen zu erfassen. Alternativ oder zusätzlich kann ein Sensor ausgebildet sein, um einen Parameter des Mediums, d.h. des Fluids, das zwischen der Vielzahl von Partikeln angeordnet ist, zu erfassen. Hierbei kann es sich beispielsweise um eine Strömungsgeschwindigkeit, einen Druck, um eine Temperatur oder eine Beschaffenheit (etwas basisch oder sauer) des Fluids handeln.

Eine Vorrichtung gemäß vorangehend beschriebener Ausführungsbeispiele kann ferner eine Elektrodenstruktur aufweisen, die mit dem ersten Anteil und/oder dem zweiten Anteil von Partikeln kontaktiert ist und ausgebildet ist, um ein elektrisches Potenzial zwischen Elektroden der Elektrodenstruktur anzulegen oder zu erfassen, das bedeutet, ein elektrisches Potenzial an oder zwischen den Partikeln kann erzeugt oder erfasst werden.

Vorangehend beschriebene Ausführungsbeispiele sind von einer Größe (beispielsweise Durchmesser oder laterale Abmessung) unabhängig. Sind die Partikel beispielsweise als Aluminiumoxidpartikel (Splitter) ausgeführt, können diese einen Durchmesser von beispielsweise zwischen 1 und 20 µm, 2 und 15 oder zwischen 5 und 12 µm aufweisen. Werden beispielsweise Silizium-Partikel verwendet, können diese beispielsweise einen Durchmesser oder eine laterale Abmessung in einem Bereich von 0,1 µm bis 20 µm, 0,5 µm bis 5 µm oder 0,8 µm bis 1,2 µm aufweisen.

Obwohl vorangehend beschriebene Ausführungsbeispiele so beschrieben wurden, dass die poröse Struktur Hohlräume aufweist, die zumindest teilweise miteinander verbunden sind, so dass die poröse Struktur 22 eine poröse Membran bildet, kann, insbesondere bei einer Partikelgröße von < 2 µm, mittels der Beschichtung auch erreicht werden, dass die poröse Struktur 22 abgedichtet ist, d.h. die Hohlräume zwischen den Partikeln verschlossen sind. So kann mittels der Beschichtung eine Aussparung auch verschlossen werden.

Obwohl vorangehend beschriebene Ausführungsbeispiele so beschrieben wurden, dass das Substrat eine ebene Form aufweist, kann das Substrat auch andere Formen aufweisen. Bspw. kann das Substrat eine gekrümmte Form (etwa eine Kuppelstruktur) oder eine abschnittsweise planare und/oder geknickte Form aufweisen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

[1] K. Takatsuki et al. "MEMS LC microchip with low dispersion and low pressure drop turn structure using distribution controlled micro pillar array", Proc. MEMS 2013, Taipei, Taiwan, January 20-24, 2013, 981-984
[2] F. Saharil et al., "Dry transfer bonding of porous silicon membranes to OSTE+ polymer microfluidic devices", Proc. MEMS 2012, Paris, France, January 29 - February 2, 2012, 232-234
[3] Y. Suzuki et al., "Development of micro catalytic combustor with Pt/Al2O3 thin films", JSME, B, Vol. 47, No. 3, 2004, 522-527
[4] P. Merz et al., "PSM-X2: Polysilicon surface micromachining process platform for vacuum-packaged sensors". Konferenzband Mikrosystemtechnik-Kongress 2005, Freiburg, Germany, October 15-17, 2005, 467-470
[5] J.H. Seo et al., "Thermal desorption/injection characterization of a microfabricated passive preconcentrator/injector for micro gas chromatography", Proc. ITHERM 2012, San Diego, CA, US, May 30-June 1, 2012
[6] B. Alfeeli, M. Agah, "Micro preconcentrator with embedded 3D pillars for breath analysis applications", Proc. SENSORS 2008, Leece, Italy, 26-29 Oct., 2008, 736-739

## Patentansprüche

1. Vorrichtung mit:
einem Substrat (12) mit einer Aussparung (14);
einer in der Aussparung (14) angeordneten Vielzahl von Partikeln (34), die mittels einer Beschichtung zu einer porösen Struktur (22; 22a, 22b) verbunden ist, wobei die poröse Struktur (22; 22a, 22b) unbeweglich mit dem Substrat (12) verbunden ist; und
einem Heizelement (28; 32; 32a-f), das ausgebildet ist, um die Vielzahl von Partikeln (34) zu erwärmen;
wobei die Vorrichtung einen Heizkörper (36) umfasst, der durch die Vielzahl von Partikeln (34) von dem Substrat (12) beabstandet ist, wobei das Heizelement (28; 32; 32a-f) an dem Heizkörper (36) angeordnet ist, und ausgebildet ist, um den Heizkörper (36) zu erwärmen, so dass der Heizkörper (36) die Vielzahl von Partikel (34) erwärmt;
wobei der Heizkörper (36) eine Inselstruktur ist, die von den Partikeln (34) der porösen Struktur (22; 22a, 22b) umschlossen ist.

2. Vorrichtung gemäß Anspruch 1, bei der
ein erster Anteil (16) der Partikel (34) mittels der Beschichtung zu der porösen Struktur (22; 22a, 22b) verbunden ist und wobei ein zweiter Anteil (18) der Partikel (34) nicht mittels der Beschichtung verbunden ist; und
wobei der erste Anteil von Partikeln (34) näher an einer Öffnung einer Aussparung (14; 14a, 14b) des Substrats (12) angeordnet ist, als der zweite Anteil (18) von Partikeln (34), so dass ein Entweichen des zweiten Anteils (18) von Partikeln (34) aus der Aussparung (14; 14a, 14b) durch die Öffnung verhindert wird.

3. Vorrichtung gemäß Anspruch 1 oder 2, bei der die Vorrichtung eine mikromechanische Struktur ist.

4. Vorrichtung gemäß einem der vorangehenden Ansprüche, bei der die poröse Struktur (22; 22a, 22b) für ein Fluid (24, 26) durchlässig ausgebildet ist.

5. Vorrichtung gemäß einem der vorangehenden Ansprüche, die ferner ein Sensorelement (32) umfasst, das benachbart zu der Vielzahl von Partikeln (34) angeordnet ist, und ausgebildet ist, um einen Parameter der Vielzahl von Partikeln (34), einen Parameter einer Kavität (58) der Vorrichtung und/oder einen Parameter eines Mediums, das zwischen der Vielzahl von Partikeln (34) angeordnet ist, zu erfassen.

6. Vorrichtung gemäß einem der vorangehenden Ansprüche, die ferner zumindest eine Elektrodenstruktur umfasst, die mit der Vielzahl von Partikeln (34) kontaktiert ist, und die ausgebildet ist, um ein elektrisches Potential der mit der Elektrodenstruktur kontaktierten Partikel (34) zu erfassen oder das elektrische Potential an die mit der Elektrodenstruktur kontaktierten Partikel (34) anzulegen.

7. Vorrichtung gemäß einem der vorangehenden Ansprüche, wobei die Vielzahl von Partikel (34) ausgebildet ist, zumindest einen Stoff zu binden und den Stoff mit einem Medium, das mit der Vielzahl von Partikeln (34) in Kontakt gebracht wird, chemisch oder physikalisch reagieren zu lassen.

8. Vorrichtung gemäß einem der vorangehenden Ansprüche, wobei die Vielzahl von Partikel (34) ausgebildet ist, um Gasmoleküle zu binden, wobei mittels einer Versiegelung (56) eine Kappenstruktur (54) mit dem Substrat (12) verbunden ist;
wobei das Substrat (12), die Kappenstruktur (54) und die Versiegelung (56) eine MEMS-Struktur (52) umschließen, so dass eine Kavität (58) der Vorrichtung entsteht;
wobei die Aussparung (14; 14a, 14b) über die Öffnung mit der Kavität (58) der Vorrichtung verbunden ist, wobei die Kavität (58) gegenüber einer Umgebung der Vorrichtung (80; 90; 90') abgedichtet ist, und wobei die Vielzahl von Partikeln (34) ausgebildet ist, um in der Kavität (58) verbleibende Gasmoleküle zu binden, so dass ein Gasdruck innerhalb der Kavität (58) bezogen auf einen Gasdruck außerhalb der Kavität (58) reduziert ist.

9. Vorrichtung gemäß einem der vorangehenden Ansprüche, bei der ein Material des Substrats eines aus einem Hableitermaterial, einem Glasmaterial, einem Keramikmaterial, einem Glaskeramikmaterial und einem Kunststoffmaterial umfasst.

10. Vorrichtung gemäß einem der vorangehenden Ansprüche, bei der eine Reaktionseigenschaft der Partikel des ersten oder zweiten Anteils (16, 18) durch ein Material oder eine Oberflächeneigenschaft der Partikel beeinflusst ist.

11. Vorrichtung gemäß einem der vorangehenden Ansprüche, bei der eine Materialoder Oberflächeneigenschaft der Partikel des ersten Anteils (16) durch die Beschichtung beeinflusst, ermöglicht oder unterdrückt ist.

12. Vorrichtung gemäß einem der vorangehenden Ansprüche, bei der auf einer Oberfläche der porösen Struktur (22) eine katalytisch aktive Substanz angeordnet ist, wobei die poröse Struktur (22) ausgebildet ist, um ein Katalysator-Funktion auszuführen.

13. Vorrichtung gemäß einem der vorangehenden Ansprüche, bei der an der porösen Struktur (22) eine weitere Schicht angeordnet ist, wobei die weitere Schicht eine Funktionalisierung der porösen Struktur (22) bereitstellt.

14. Verfahren zum Herstellen einer Vorrichtung mit folgenden Schritten:
Bereitstellen eines Substrats (12) mit einer Aussparung (14);
Anordnen einer Vielzahl von Partikeln (34) in der Aussparung (14) ;
Beschichten der Vielzahl von Partikeln (34) und des Substrats (12), so dass die Vielzahl von Partikeln (34) zumindest teilweise beschichtet ist, und zu einer porösen Struktur (22; 22a, 22b) verbunden ist und so dass die poröse Struktur (22; 22a, 22b) unbeweglich mit dem Substrat (12) verbunden ist; und
Anordnen eines Heizelementes, so dass ein Erwärmen des Heizelementes die Vielzahl von Partikeln (34) erwärmt,
Anordnen eines Heizkörpers (36), so dass dieser durch die Vielzahl von Partikeln (34) von dem Substrat (12) beabstandet ist, so dass das Heizelement (28; 32; 32a-f) an dem Heizkörper (36) angeordnet ist, und ausgebildet ist, um den Heizkörper (36) zu erwärmen, so dass der Heizkörper (36) die Vielzahl von Partikel (34) erwärmt;
wobei das Anordnen der Vielzahl von Partikel (34), das Beschichten der Vielzahl von Partikel (34), das Anordnen des Heizelements und/oder das Anordnen des Heizkörpers (36) so ausgeführt werden, dass der Heizkörper (36) eine Inselstruktur ist, die von den Partikeln (34) der porösen Struktur (22; 22a, 22b) umschlossen ist.

15. Verfahren gemäß Anspruch 14, bei dem der Schritt des Beschichtens mittels einer chemischen Gasphasenabscheidung, einer Atomlagenabscheidung oder einer atomaren Dampfphasenabscheidung ausgeführt wird.

## Claims

1. An apparatus comprising:
a substrate (12) having a recess (14);
a multitude of particles (34), arranged in the recess (14), joined to a porous structure (22; 22a, 22b) by means of a coating, the porous structure (22; 22a, 22b) being immovably joined to the substrate (12); and
a heating element (28; 32; 32a-f) configured to heat the multitude of particles (34);
wherein the apparatus includes a heating body (36) spaced apart from the substrate (12) by the multitude of particles (34), wherein the heating element (28; 32; 32a-f) is arranged at the heating body (36) and is configured to heat the heating body (36) so that the heating body (36) heats the multitude of particles (34),
wherein the heating body (36) is an island structure enclosed by the particles (34) of the porous structure (22; 22a; 22b).

2. The apparatus according to claim 1, wherein
a first portion (16) of the particles (34) is joined to the porous structure (22; 22a, 22b) by means of the coating, and wherein a second portion (18) of the particles (34) is not joined by means of the coating; and
wherein the first portion of the particles (34) is arranged closer to an opening of a recess (14; 14a, 14b) of the substrate (12) than the second portion (18) of the particles (34) so that a leaking of the second portion (18) of the particles (34) from the recess (14; 14a, 14b) through the opening is prevented.

3. The apparatus according to claim 1 or 2, wherein the apparatus is a micromechanical structure.

4. The apparatus according to any one of the preceding claims, wherein the porous structure (22; 22a, 22b) is configured to be permeable for a fluid (24, 26).

5. The apparatus according to any one of the preceding claims, further including a sensor element (32) arranged adjacent to the multitude of particles (34) and configured to sense a parameter of the multitude of particles (34), a parameter of a cavity (58) of the apparatus and/or a parameter of a medium arranged between the multitude of particles (34).

6. The apparatus according to any one of the preceding claims, further including at least one electrode structure which is in contact with the multitude of particles (34) and is configured to sense an electric potential of the particles (34) in contact with the electrode structure, or to apply the electric potential to the particles (34) in contact with the electrode structure.

7. The apparatus according to any one of the preceding claims, wherein the multitude of particles (34) is configured to bind at least one substance and to cause the substance to react chemically or physically with a medium brought in contact with the multitude of particles (34).

8. The apparatus according to any one of the preceding claims, wherein the multitude of particles (34) is configured to bind gas molecules, wherein a cap structure (54) is joined to the substrate (12) by means of a seal (56);
wherein the substrate (12), the cap structure (54) and the seal (56) enclose an MEMS structure (52) so that a cavity (58) of the apparatus is created;
wherein the recess (14; 14a, 14b) is joined to the cavity (58) of the apparatus via the opening, wherein the cavity (58) is sealed against a surrounding area of the apparatus (80; 90; 90'), and wherein the multitude of particles (34) is configured to bind gas molecules remaining in the cavity (58) so that a gas pressure inside of the cavity (58) is reduced with respect to a gas pressure outside of the cavity (58).

9. The apparatus according to any one of the preceding claims, wherein a material of the substrate includes one of a semiconductor material, a glass material, a ceramic material, a glass-ceramic material and a plastic material.

10. The apparatus according to any one of the preceding claims, wherein a reaction characteristic of the particles of the first or second portions (16, 18) is influenced by a material or a surface characteristic of the particles.

11. The apparatus according to any one of the preceding claims, wherein a material characteristic or a surface characteristic of the particles of the first portion (16) is influenced, enabled or suppressed by the coating.

12. The apparatus according to any one of the preceding claims, wherein a catalytically active substance is arranged on a surface of the porous structure (22), the porous structure (22) being configured to perform a catalyst function.

13. The apparatus according to any one of the preceding claims, wherein a further layer is arranged at the porous structure (22), the further layer providing functionalization of the porous structure (22).

14. A method for manufacturing an apparatus, comprising:
providing a substrate (12) having a recess (14);
arranging a multitude of particles (34) in the recess (14);
coating the multitude of particles (34) and the substrate (12) so that the multitude of particles (34) are at least partially coated and are joined to a porous structure (22; 22a, 22b) and so that the porous structure (22; 22a, 22b) is immovably joined to the substrate (12); and
arranging a heating element so that an increase in temperature of the heating element heats the multitude of particles (34),
arranging a heating body (36) so that the same is spaced apart from the substrate (12) by the multitude of particles (34) so that the heating element (28; 32; 32a-f) is arranged at the heating body (36) and is configured to heat the heating body (36) so that the heating body (36) heats the multitude of particles (34);
wherein arranging the multitude of particles (34), coating the multitude of particles (34), arranging the heating element and/or arranging the heating body (36) are performed so that the heating body (36) is an island structure enclosed by the particles (34) of the porous structure (22; 22a; 22b).

15. The method according to claim 14, wherein the step of coating is performed by means of chemical vapor deposition, atomic layer deposition or atomic vapor deposition.

## Revendications

1. Dispositif avec :
un substrat (12) avec un évidement (14) ;
une pluralité de particules (34) disposée dans l'évidement (14) qui est connectée à une structure poreuse (22 ; 22a, 22b) à l'aide d'un revêtement, la structure poreuse (22 ; 22a, 22b) étant connectée au substrat (12) de manière immobile ; et
un élément chauffant (28 ; 32 ; 32a-f) qui est conçu pour chauffer la pluralité de particules (34) ;
dans lequel le dispositif comprend un corps de chauffe (36) qui est éloigné du substrat (12) par la pluralité de particules (34), dans lequel l'élément chauffant (28 ; 32 ; 32a-f) est disposé sur le corps de chauffe (36) et est conçu pour chauffer le corps de chauffe (36) de telle sorte que le corps de chauffe (36) chauffe la pluralité de particules (34) ;
dans lequel le corps de chauffe (36) est une structure insulaire qui est entourée par les particules (34) de la structure poreuse (22 ; 22a, 22b).

2. Dispositif selon la revendication 1, dans lequel
une première partie (16) des particules (34) est connectée à la structure poreuse (22 ; 22a, 22b) à l'aide du revêtement et dans lequel une seconde partie (18) des particules (34) n'est pas connectée à l'aide du revêtement ; et
dans lequel la première partie (16) de particules (34) est disposée de manière plus proche d'une ouverture de l'évidement (14 ; 14a, 14b) du substrat (12) que la seconde partie (18) de particules (34) de manière à empêcher toute fuite de la seconde partie (18) de particules (34) hors de l'évidement (14 ; 14a, 14b) à travers l'ouverture.

3. Dispositif selon la revendication 1 ou 2, dans lequel le dispositif est une structure micromécanique.

4. Dispositif selon l'une des revendications précédentes, dans lequel la structure poreuse (22 ; 22a, 22b) est conçue de manière perméable à un fluide (24, 26).

5. Dispositif selon l'une des revendications précédentes, qui comprend en outre un élément de capteur (32) qui est disposé de manière adjacente à la pluralité de particules (34) et est conçu pour détecter un paramètre de la pluralité de particules (34), un paramètre d'une cavité (58) du dispositif et/ou un paramètre d'un milieu qui est disposé entre la pluralité de particules (34).

6. Dispositif selon l'une des revendications précédentes, qui comprend en outre au moins une structure d'électrode qui est en contact avec la pluralité de particules (34) et qui est conçue pour détecter un potentiel électrique des particules (34) en contact avec la structure d'électrode ou pour appliquer le potentiel électrique aux particules (34) en contact avec la structure d'électrode.

7. Dispositif selon l'une des revendications précédentes, dans lequel la pluralité de particules (34) est conçue pour lier au moins une substance et laisser réagir chimiquement ou physiquement la substance avec un milieu qui est mis en contact avec la pluralité de particules (34).

8. Dispositif selon l'une des revendications précédentes, dans lequel la pluralité de particules (34) est conçue pour lier des molécules de gaz, dans lequel une structure de capuchon (54) est connectée au substrat (12) à l'aide d'un cachetage (56) ;
dans lequel le substrat (12), la structure de capuchon (54) et le cachetage (56) entourent une structure MEMS (52) de manière à générer une cavité (58) du dispositif ;
dans lequel l'évidement (14 ; 14a, 14b) est connecté à la cavité (58) du dispositif par le biais de l'ouverture, dans lequel la cavité (58) est rendue étanche vis-à-vis d'un environnement du dispositif (80 ; 90 ; 90') et dans lequel la pluralité de particules (34) est conçue pour lier des molécules de gaz restant dans la cavité (58) de telle sorte qu'une pression gazeuse soit réduite à l'intérieur de la cavité (58) par rapport à une pression gazeuse à l'extérieur de la cavité (58).

9. Dispositif selon l'une des revendications précédentes, dans lequel un matériau du substrat comprend un matériau parmi un matériau semi-conducteur, un matériau en verre, un matériau céramique, un matériau en vitrocéramique et un matériau en plastique.

10. Dispositif selon l'une des revendications précédentes, dans lequel une propriété de réaction des particules de la première ou la seconde partie (16, 18) est influencée par un matériau ou par une propriété de surface des particules.

11. Dispositif selon l'une des revendications précédentes, dans lequel une propriété de matériau ou de surface des particules de la première partie (16) est influencé(e), activé(e) ou supprimé(e) par le revêtement.

12. Dispositif selon l'une des revendications précédentes, dans lequel une substance catalytiquement active est disposée sur une surface de la structure poreuse (22), la structure poreuse (22) étant conçue pour remplir une fonction de catalyseur.

13. Dispositif selon l'une des revendications précédentes, dans lequel une autre couche est disposée sur la structure poreuse (22), l'autre couche fournissant une fonctionnalisation de la structure poreuse (22).

14. Procédé destiné à fabriquer un dispositif aux étapes suivantes consistant à :
fournir un substrat (12) avec un évidement (14) ;
disposer une pluralité de particules (34) dans l'évidement (14) ;
revêtir la pluralité de particules (34) et le substrat (12) de telle sorte que la pluralité de particules (34) soit revêtue au moins partiellement et soit connectée à une structure poreuse (22 ; 22a, 22b) et de telle sorte que la structure poreuse (22 ; 22a, 22b) soit connectée au substrat (12) de manière immobile ; et
disposer un élément chauffant de telle sorte qu'un chauffage de l'élément chauffant chauffe la pluralité de particules (34),
disposer un corps de chauffe (36) de telle sorte que celui-ci soit éloigné du substrat (12) par la pluralité de particules (34), de telle sorte que l'élément chauffant (28 ; 32 ; 32a-f) soit disposé sur le corps de chauffe (36) et soit conçu pour chauffer le corps de chauffe (36), de telle sorte que le corps de chauffe (36) chauffe la pluralité de particules (34) ;
dans lequel la disposition de la pluralité de particules (34), le revêtement de la pluralité de particules (34), la disposition de l'élément chauffant et/ou la disposition du corps de chauffe (36) sont réalisés de telle sorte que le corps de chauffe (36) soit une structure insulaire qui est entourée par les particules (34) de la structure poreuse (22 ; 22a, 22b).

15. Procédé selon la revendication 14, dans lequel l'étape de revêtement est réalisée à l'aide d'un dépôt chimique en phase vapeur, d'un dépôt de couche atomique ou d'un dépôt atomique en phase vapeur.
